# EUROPÄISCHE PATENTSCHRIFT

(11) **EP 2 698 616 B1**
(45) Veröffentlichungstag und Bekanntmachung des Hinweises auf die Patenterteilung: **09.10.2019**
(21) Anmeldenummer: 13180789.3
(22) Anmeldetag: 16.08.2013
(51) Int. Cl.: G01L 1/14, G01L 9/00, A61G 5/00, B60N 2/00

(54) **Flächiger volumenkompressibler kapazitiver Sensor zur Messung von Druck und/oder zur Messung oder Detektion von Deformationen**
Flat compressible volume capacitive sensor for measuring pressure and/or for the measurement or detection of deformations
Capteur capacitif plat à compression de volume pour la mesure de la pression et/ou la mesure ou la détection de déformations

(30) Priorität: 17.08.2012 DE 102012107581
(43) Veröffentlichungstag der Anmeldung: 19.02.2014
(73) Patentinhaber: Fraunhofer-Gesellschaft zur Förderung der angewandten Forschung e.V., 80686 München (DE)
(72) Erfinder: Böse, Holger, 97080 Würzburg (DE); Hofmann, Florian, 79761 Waldshut-Tiengen (DE); Hassel, Till, 97072 Würzburg (DE)
(74) Vertreter: Strehl Schübel-Hopf & Partner

(56) Entgegenhaltungen:
- DE-A1- 3 841 243
- DE-T2- 3 750 876
- DE-T5-112007 000 370
- JP-A- 2009 002 740
- US-A- 4 827 763
- US-A1- 2004 163 939
- US-A1- 2006 005 630
- US-A1- 2008 202 251
- US-A1- 2010 282 000

## Beschreibung

Die Erfindung betrifft einen flächigen kapazitiven volumenkompressiblen und zumindest auf einer seiner äußeren Flächenseiten flexiblen Sensor zur Messung von Drücken oder Druckverteilungen und/oder Deformationen, in dem sich bei Druckanlegung auf den Sensor die elektrische Kapazität messbar - und bei Bedarf auch ortsaufgelöst - erhöht.

Der Begriff "flächig" deutet im Rahmen der vorliegenden Erfindung allein auf die zweidimensionale Ausdehnung des Sensors hin, sodass der Sensor zumindest über eine äußere Flächenseite verfügt, auf welcher der Sensor dem zu messenden/detektierenden Druck oder der zu messenden/detektierenden Deformation ausgesetzt werden kann. Der Begriff "flächig" soll jedoch nicht als einschränkend auf eine ebene geometrische Form dieser Flächenseite oder auf eine flache/dünne Ausgestaltung des Sensors verstanden werden, wenngleich solche Ausführungsformen auch mitumfasst sind. Das Gleiche gilt auch für Elemente des Sensors, die im Folgenden als "flächig" bezeichnet werden.

Gegenüber bekannten Druck- und Deformationssensoren richtet sich die vorliegende Erfindung auf eine Verbesserung der Sensorempfindlichkeit für geringfügige Druck- oder Deformationsänderungen bei einer von der Herstellung her einfachen und günstigen, aber zugleich hinsichtlich der Anpassungsfähigkeit an die Erfordernisse der jeweiligen Anwendung - wie etwa an eine erforderliche Ortsauflösung - leistungsfähigeren Konstruktion des Sensors.

In vielen verschiedenen Situationen ist es beispielsweise erforderlich, auf einer flexiblen, d.h. nachgiebigen/verformbaren, flächigen Unterlage die von einem aufliegenden Körper auf die Unterlage ausgeübte Druckverteilung zu messen. Dies ist in solchen Anwendungen besonders relevant, bei denen der Druck auf die Unterlage durch das Gewicht einer Person erzeugt wird.

Ein Beispiel mit großer technischer Bedeutung ist die Sensorik in einem Autositz, mit der die Druckverteilung der darauf sitzenden Person registriert wird. Damit kann nicht nur die Belegung des Sitzes erkannt, sondern auch das Gewicht der Person ermittelt und zusätzlich die Verteilung ihres Gewichtes auf der Sitzfläche erfasst werden. Die Kenntnis dieser Daten kann bei einem Unfall eine erhebliche Bedeutung für die Ansteuerung eines Airbags haben. Durch eine auf die Größe, das Gewicht und/oder die aktuelle Sitzposition abgestimmte Auslösung des Airbags kann z.B. zwischen einem Kind und einem Erwachsenen unterschieden werden und Verletzungen können unter Umständen vermieden oder verringert werden.

Ein weiterer wichtiger Anwendungsfall für ein solches Sensorsystem zur Messung einer flächigen Druckverteilung ist die Auflage einer bewegungsunfähigen Person in einem Bett. Hier ist es erforderlich, Stellen mit hoher Druckbelastung des Körpers zu erkennen und gezielt zu entlasten, da andernfalls schwer heilende Wunden entstehen können (Dekubitus). Eine ähnliche Situation ergibt sich für einen Querschnittsgelähmten auf der Sitzfläche seines Rollstuhls. Weiterhin ist es beispielsweise für Diabetes-Patienten sehr wichtig, beim Stehen die Druckverteilung des Fußes im Schuh zu erfassen, da auch hier schwere Schäden bis hin zur Erfordernis einer Amputation entstehen können.

Für die Messung eines mechanischen Druckes stehen eine große Auswahl von Messmethoden und entsprechende Sensoren zur Verfügung. Wenn jedoch die Druckverteilung auf einer großen Fläche erfasst werden soll, ist dies mit einem hohen Aufwand verbunden, denn dafür muss eine Vielzahl von Sensoren eingesetzt werden. Noch schwieriger zu realisieren ist die Druckmessung auf einer flexiblen, d.h. nachgiebigen/verformbaren, Unterlage, weil die Sensoranordnung der Verformung der Unterlage folgen und sich dabei in der Regel in gewissen Grenzen auch lateral dehnen muss.

Bisher stehen nur wenige Sensorsysteme zur Verfügung, mit denen Druckverteilungen auf flexiblen Unterlagen prinzipiell gemessen werden können, z.B. auf der Messung der Leitfähigkeit basierende Systeme. Diese sind jedoch technisch äußerst aufwendig, dementsprechend kostspielig und können daher das breite Feld der alltäglichen Anwendungen, von welchem in den obigen Beispielen nur ein Teil aufgezeigt wurde, nicht oder nur sehr eingeschränkt bedienen.

In einem Beitrag auf IEEE Sensors 2010 Conference stellten Riedl et al. einen kapazitiven Drucksensor für Anwendungen in der Luftfahrt vor, der zu einer flächigen Erfassung von Druckverteilungen auf einer unebenen Oberfläche, z.B. auf einer Tragfläche eines Flugzeugmodells, geeignet ist. Dieser kapazitive Drucksensor besteht aus einer dünnen Polydimethylsiloxan-Schicht mit einer Aluminiumbeschichtung auf deren Rückseite und Erhöhungen auf deren Vorderseite, wobei die Erhöhungen auf einem mit Kupfer beschichteten dünnen Polyimid-Substrat aufliegen. Die mit Erhöhungen strukturierte PDMS-Schicht wirkt als Dielektrikum mit einer geringen Federkonstanten zwischen zwei Elektroden. Dank der zumindest einmaligen Biegsamkeit des Polyimid-Substrats wird die Verwendung des Sensors auf gekrümmten starren Oberflächen ermöglicht, nicht jedoch auf nachgiebigen Unterlagen.

In einer Veröffentlichung von Böse et al. im Konferenzband "Sensor und Test" 2010 wurde ein Kraftsensor beschrieben, bei dem eine beidseitig mit Elektroden beschichtete Elastomerfolie zwischen gewellten Oberflächen zweier starrer Stempel definiert verformt wird. Werden die Stempel aufeinander gedrückt, so wird die Elastomerfolie zwischen den gewellten Oberflächen der Stempel gedehnt, wodurch die elektrische Kapazität des durch die Elektroden gebildeten Kondensators steigt. Bei der Bewegung der Stempel zueinander werden diese durch Stifte senkrecht zur ungedehnten Folienoberfläche geführt, damit die Folie mit einer definierten Kraft belastet wird. Eine Druckmessung auf nachgiebigen Unterlagen, insbesondere eine Auflösung nach dem Ort, ist mit diesem starren Aufbau jedoch nicht möglich.

Die JP 2009 0027740A beschreibt einen flächigen kapazitiven Sensor, welcher aus zwei elastomeren Oberflächen besteht, welche teilweise mit Elektroden beschichtet sind und zwischen denen sich ein isolierender Polyethylen-film befindet.

Neben Sensoren zur verbesserten Messung bzw. Detektion von Druck oder Druck- und/oder Deformationsverteilungen auf flexiblen flächigen Unterlagen richtet sich die vorliegende Erfindung auch auf einseitig oder beidseitig flexibel ausgebildete flächige Drucksensoren für fluide Medien wie Flüssigkeiten, Gase, Pulver, rieselfähige Materialien oder disperse Stoffe.

Gegenstand der Erfindung ist ein Sensor gemäß des Anspruchs 1 oder 3.

Kapazitätsänderungen bis über 100 % sind dabei möglich.
Der erfindungsgemäße Sensor stellt daher einen Kondensator oder - bei mehreren Elektrodenpaaren - ein System von mehreren Kondensatoren dar, dessen/deren Kapazität (ggf. jeweils) von der Fläche der Elektroden und von deren Abstand zueinander abhängt. Durch die im Sensor vorgesehenen Hohlräume wird dieser volumenkompressibel und kann daher relativ leicht zusammengedrückt werden. Durch das Verformen/Zusammendrücken des erfindungsgemäßen Sensors in Richtung senkrecht zu seiner flexiblen Flächenseite wird der Abstand zwischen den Elektroden verringert und optional in spezifischen Ausgestaltungen zugleich auch deren Fläche vergrößert, was zu einem erfindungsgemäß **deutlichen** Anstieg der zwischen den Elektroden - ggf. lokal - gemessenen Kapazität führt.

Der oder die Hohlräume sind in einem einfachen Fall gasgefüllt, z.B. mit Luft oder einem inerten Gas. Wenn der flächige Sensor zusammengedrückt wird, kann das Gas aus (nach außen offenen) Hohlräumen aus dem Sensor - je nach Ausführungsform - z.B. seitlich an seinen Stirnseiten entweichen oder aber in (nach außen geschlossenen) Hohlräumen verbleiben und dem Druck durch die hohe Kompressibilität des Gases nachgeben. Es sind auch Kombinationen dieser beiden Möglichkeiten in einem Sensor möglich. In spezifischen Ausgestaltungen können sich darüber hinaus auch nicht gasförmige Stoffe in den Hohlräumen befinden oder diese ausfüllen, wie z.B. komprimierbare Feststoffe, wie etwa Schaumstoffe, oder zum Entweichen aus dem Sensor geeignete Stoffe, wie etwa Flüssigkeiten.

Vorteile des erfindungsgemäßen Sensors im Hinblick auf die Empfindlichkeit einer Druck- bzw. Deformationsmessung und auf den zugänglichen Messbereich werden aus dem Vergleich mit dielektrischen Elastomerfolien deutlich, welche bereits bekannt sind. Eine dielektrische Elastomerfolie besteht aus einer stark dehnbaren Elastomerfolie, die beidseitig mit ebenfalls stark dehnbaren Elektroden beschichtet ist. Die Elektroden behalten auch bei einer hohen Dehnung eine ausreichende elektrische Leitfähigkeit bei. Eine solche dielektrische Elastomerfolie hat damit die Form eines Kondensators, dessen Kapazität von der Fläche der Elektroden und der Dicke der dazwischen liegenden Elastomerfolie abhängt. Wird die dielektrische Elastomerfolie gedehnt, so vergrößert sich die Elektrodenfläche und verringert sich zugleich der Elektrodenabstand. Beides führt zu einer Kapazitätserhöhung. Damit wirkt die dielektrische Elastomerfolie wie ein kapazitiver Dehnungssensor.

Bei der Auflage einer dielektrischen Elastomerfolie auf einer nachgiebigen Unterlage, wie z. B. einem Sitz, ist die sich bei einer Druckbelastung einstellende Dehnung der Folie jedoch äußerst gering und damit die Empfindlichkeit einer Kapazitätsmessung kaum ausreichend. Das hängt damit zusammen, dass die dielektrische Elastomerfolie weitgehend volumeninkompressibel ist. Beim Zusammendrücken der Folie weicht das Elastomermaterial zur Seite aus, wodurch sich die Folienfläche vergrößert. Dies ist allerdings mit einem hohen mechanischen Widerstand verbunden, d. h. der Sensor reagiert auf mechanischen Druck auf die Folie nur äußerst unempfindlich.

Bei einem Sensor nach der Erfindung dienen demgegenüber die zusammendrückbaren Hohlräume dazu, dass die Verringerung des Elektrodenabstands eines Elektrodenpaares und damit die erfassbare Kapazitätsänderung bei einer geringen Druckbelastung des Sensors - wie z.B. bei einer lokalen Druckerhöhung oder einer lokalen Deformation wie Stauchung - erheblich höher ausfällt.

In manchen Ausgestaltungen des erfindungsgemäßen Sensors kann die Elastomerfolie wegen ihrer Elastizität zudem zur Erzeugung einer Rückstellkraft bei der Druckausübung auf den Sensor und dem damit einhergehenden Zusammendrücken der erfindungsgemäßen Hohlräume dienen, wodurch die Rückkehr des Sensors in den ursprünglichen Zustand bei seiner Entlastung unterstützt wird.

Der errfindungsgemäße Sensor weist zwei gleich, ähnlich oder gänzlich unterschiedlich ausgebildete flexible oder starre Oberflächen genannter Arten zu beiden Flächenseiten der Elastomerfolie in einem erfindungsgemäßen Sensor auf. Auch Ausführungsformen mit mehreren im obigen Sinne übereinander angeordneten flexiblen oder starren Oberflächen genannter Arten zu einer oder zu den beiden Seiten der Elastomerfolie sind möglich.

Die mindestens zwei Elektroden bzw. Elektrodenschichten können sich in einem erfindungsgemäßen flächigen Sensor in einem einfachen Fall jeweils über die gesamte Fläche des Sensors, d.h. z.B. über die gesamte Fläche der Elastomerfolie und/oder einer oder mehrerer flexibler oder starrer Oberflächen erstrecken. Es können jedoch Elektroden/Elektrodenschichten eingesetzt werden, die sich nur über eine bestimmte Teilfläche des Sensors erstrecken. Ferner kann es sich bei einer Elektrodenschicht um eine lateral strukturierte Elektrodenschicht mit mehreren in verschiedenen Flächensegmenten des Sensors angeordneten und voneinander elektrisch unabhängigen oder elektrisch miteinander verbundenen/gekoppelten Elektroden zum Zwecke einer ortsaufgelösten Druck- bzw. Deformationsmessung mittels dementsprechend mehrerer über die Gesamtfläche des Sensors verteilter Elektrodenpaare handeln. Genauere Beispiele für diese verschiedenen Möglichkeiten folgen weiter unten. Bei der Beschreibung spezifischer Ausgestaltungen wird im Folgenden der Einfachheit halber meist von "Elektroden/Elektrodenschichten" die Rede sein, die eine Elastromerfolie, Elastomerschicht oder ein anderes Element des Sensors "bedecken" o.ä., ausfüllen oder darin verlaufen. Dabei soll in allen Fällen neben einer vollständigen "Bedeckung", "Beschichtung", "Ausfüllung" etc. der jeweiligen Fläche/Schicht mit einer durchgehenden leitfähigen Elektrodenschicht/Elektrode stets in erster Linie eine teilweise, z.B. lokale Bedeckung, Beschichtung, Ausfüllung etc. dieser Fläche/Schicht mit der Elektrode bzw. eine Bedeckung/Beschichtung/Ausfüllung mit einer wie angegeben lateral strukturierten Elektrode als möglich und als für die Erfindung besonders wichtig verstanden werden, ohne dass es jedes Mal wiederholt explizit erwähnt wird. Geeignete Materialien, chemische Elemente und Verbindungen sind weiter unten angegeben.

Bei einem Sensor nach der Erfindung kann in der Elastomerfolie und/oder in den mehreren flexiblen Oberflächen vorzugsweise überall ein und dasselbe Elastomermaterial verwendet werden. Dies ist von Vorteil zum einen wegen der Einfachheit der Herstellung, zum anderen wegen der identischen Eigenschaften, wie z.B. des Elastizitätsmoduls, der Temperaturabhängigkeit, der Materialalterung etc., von aus einem und demselben Elastomermaterial gefertigten Teilen des Sensors. Es können aber bei Bedarf auch zwei oder mehr verschiedene Elastomermaterialien innerhalb einer Elastomerschicht oder für jeweils verschiedene Elemente in einem Sensor kombiniert werden, ggf. auch mit starren Materialien. Ebenfalls können in einem Sensor unterschiedlich stark vernetzte Elastomermaterialien verwendet werden, d.h. das gleiche Elastomermaterial, welches unterschiedlich stark vernetzt wird und dadurch Bereiche oder Elemente mit unterschiedlicher Härte im Sensor ausbildet (zB können eine Elastomerfolie und eine (dicke) Elastomerschicht aus gleichem Elastomermaterial, jedoch mit unterschiedlicher Härte, hergestellt sein.) Wenn in der nachfolgenden Beschreibung der Kürze wegen die Rede von "dem/einem Elastomer(material)" ist, sollen stets auch Kombinationen mehrerer unterschiedlicher Elastomermaterialien (bzw. mit unterschiedlichen Vernetzungsgraden/Härten) als mitumfasst verstanden werden. Geeignete Materialien und chemische Verbindungen sind weiter unten angegeben.

Das erfindungsgemäße Prinzip umfasst viele sehr verschiedene Kombinationen der gegenseitigen Anordnung und Elektrodierung der flächigen Elastomerfolie und mehrerer flexibler oder starrer Oberflächen mit diversen Oberflächengeometrien/Oberflächentopographien in einem Sensor nach der Erfindung, um den Anforderung der jeweiligen Anwendung gerecht zu werden. Die oben bereits angedeuteten und weiter unten ausführlicher beschriebenen Beispiele eines erfindungsgemäßen Sensors können jeweils untereinander kombiniert und deren Elemente untereinander ersetzt werden.

Eine zentrale Wirkung des volumenkompressiblen, kapazitiven, flächigen Sensors nach der Erfindung besteht darin, dass damit Druckverteilungen bzw. Deformationen/Verformungen und/oder Auflagedrücke sensibel und großflächig, bei Bedarf so fein wie erforderlich nach dem Ort aufgelöst, gemessen (bzw. detektiert) werden können. Eine hohe Druckempfindlichkeit kann durch eine geeignete Anbringung/Einspannung der Elastomerfolie und eine geeignete Strukturierung der Hohlräume erzielt werden. Insbesondere durch den möglichen Einsatz von Elastomermaterialien für sämtliche tragenden flexiblen Schichten des Sensors werden zugleich eine einfache und kostengünstige Herstellung (z.B. aus einem und demselben Material), sowie bei Bedarf sogar eine beträchtliche laterale Dehnbarkeit des gesamten Sensors ermöglicht. Ein wesentlicher Vorteil in einem solchen Fall ist die Flexibilität, denn auch Druckverteilungen auf verformbaren Unterlagen wie Sitzflächen oder Betten können damit ermittelt werden, problemlos gerade im Dauereinsatz. Ein besonderer Vorteil bei allen Varianten nach der Erfindung ist aus der Sicht der niedrigen Herstellungskosten der einfache Aufbau, ferner die wenig aufwendige Messelektronik, was den erfindungsgemäßen Sensor auch für Massenanwendungen nutzbar macht.

Mögliche Anwendungen der Erfindung sind:
- Registrierung der Sitzbelegung, des Gewichtes und der Sitzposition von Fahrzeuginsassen im Automobil zur Steuerung des Airbags u.ä.;
- Erfassung der Druckverteilung von bewegungsunfähigen bettlägerigen Patienten zur Verhinderung von schwer heilenden Wunden (Dekubitus);
- Messung der Druckverteilung von querschnittsgelähmten Personen beim Sitzen im Rollstuhl zur Vermeidung von Wunden;
- Detektion der Druckverteilung im Schuh, z. B. bei Diabetes-Patienten oder auch für orthopädische Analysen;
- Sensorflächen auf Fußböden zur Detektion von darauf tretenden Personen für Sicherheitszwecke;
- Flexible Waagen oder andere flexible Drucksensoren;
- Sensorflächen auf lastempfindlichen Flächen wie Ausstellungs- oder Vitrinenböden etc. zur Detektion bzw. Messung der Druckverteilung, Deformation und/oder Gesamtlast;
- Füllstandssensoren zur Messung der Füllhöhe von Flüssigkeiten;
- Messung von Gasdrücken oder von Differenzdrücken von Gasen;
- Messung von Auflagedrücken von dispersen Stoffen wie Pulvern und rieselfähigen Materialien.

Bevorzugte Ausführungsformen der Erfindung sind in den abhängigen Ansprüchen und in der nachfolgenden Beschreibung angegeben.

Ein Sensor nach der ersten Variante der Erfindung hat die Ausgestaltung gemäß Anspruch 1.

Dielektrische Elastomerfolien sind als solche bekannt und wurden eingangs bereits beschrieben. Eine dielektrische Elastomerfolie besteht typischerweise aus einer (oder mehreren) stark dehnbaren nicht leitfähigen Elastomerfolie(n) und ist außenseitig beidseitig mit ebenfalls stark dehnbaren Elektroden beschichtet. Wie ebenfalls eingangs erwähnt, ist die sich bei der Auflage und Belastung einer dielektrischen Elastomerfolie auf einer nachgiebigen Unterlage, wie z. B. einem Sitz, einstellende Dehnung der Folie sehr klein und damit die Empfindlichkeit der Kapazitätsmessung äußerst gering.

Bei der Sensormatte nach der ersten Variante der Erfindung fällt die Kapazitätserhöhung der dielektrischen Elastomerfolie bei vergleichbarer (Druck-)Belastung erheblich höher aus, als bei der einfachen dielektrischen Elastomerfolie. Die erfindungsgemäße Kapazitätserhöhung kann bis über 100 % betragen.

Dieser gewünschte Effekt ergibt sich aus der erfindungsgemäßen Anordnung nach dieser Variante, bei welcher eine dielektrische Elastomerfolie zwischen zwei Elastomerschichten angeordnet, vorzugsweise eingespannt ist, die auf ihren der Elastomerfolie zugewandten Seiten jeweils ein ausgeprägt unebenes Profil mit Erhöhungen (bzw. Vorsprüngen) und/oder Vertiefungen (bzw. Ausnehmungen) besitzen. Dabei sollten Erhöhungen und Vertiefungen der beiden Elastomerschichten teilweise oder weitgehend/möglichst komplementär zueinander stehen, d. h. eine Erhöhung der einen Elastomerschicht sollte in der Sensormatte gegenüber einer Vertiefung der anderen Elastomerschicht angeordnet sein, so dass sich z.B. ein wellenartig ausgebildeter Zwischenraum beim Zusammenfügen und Ineinandergreifen der beiden Profile ergeben kann. Die beiden profilierten Elastomerschichten und die dazwischen liegende dielektrische Elastomerfolie bilden die wichtigsten Komponenten der flexiblen Drucksensormatte nach dieser Variante.

Insbesondere ist wegen der Elastizität der Elastomerschichten und der daraus resultierenden Flexibilität der gesamten Sensormatte nach dieser Variante damit eine eingangs erwähnte Druck- oder Deformationsmessung auf flächigen nachgiebigen Unterlagen wie Sitzen und Betten möglich.

In allen Fällen nach dieser und anderen Ausführungsformen und Varianten des erfindungsgemäßen Sensors können die Erhöhungen/Vertiefungen im Profil (oder in einer Oberflächentopographie) einer Elastomerschicht (oder einer sonstigen flexiblen oder starren Oberfläche einer der eingangs genannten Arten) untereinander variierende Formen besitzen, z.B. unterschiedliche Höhe/Tiefe oder Dicke haben, was für bestimmte Anwendungen, wie z.B. bei entlang der Fläche des Sensors bzw. der Sensormatte variierenden Anforderungen an dessen/deren mechanische Stabilität oder die Sensorempfindlichkeit, günstig sein kann.

Einfachheitshalber wird im Folgenden und in den Figuren in allen Fällen nach der Erfindung mit mehreren Erhöhung (bzw. Vertiefungen) rein beispielhaft von untereinander identisch oder ähnlich ausgebildeten Erhöhungen ausgegangen, auch wenn dies selbstverständlich kein notwendiges Kriterium ist. Darüber hinaus ist/sind das/die Oberflächenprofil(e) einer/der Elastomerschicht(en)/Oberfläche(n) in dem erfindungsgemäßen Sensor vorzugsweise periodisch ausgebildet. Eine periodische Verteilung der Profilerhöhungen bzw. -Vertiefungen über die Sensorfläche trägt zu einer Vergleichmäßigung der Sensorempfindlichkeit über seine Fläche und zur Genauigkeit der Druck- oder Deformationsmessung bei. Die Periodizität kann eindimensional, besonders bevorzugt zweidimensional sein. Das jeweilige periodische Oberflächenprofil kann in einem einfachen Fall durch rechtwinklig ausgebildete Stege oder Stufen gebildet sein oder, falls geeignet, eine Sinus- oder andere glatte/abgerundete Wellenform oder aber eine Trapez- oder Dreiecksform aufweisen. Nicht periodische Profile können bei Anwendungen von Vorteil sein, bei denen die Anforderungen an die Druckmessung und die Stabilität entlang der Fläche des Sensors (bzw. der Sensormatte) variieren. Die Periodizität bzw. Nichtperiodizität der Profilerhöhungen kann in einem Zusammenhang bzw. einer Korrelation mit der Strukturierung der Elektrodenschichten stehen, auf die weiter unten eingegangen wird. Die Periodizität bzw. eine nichtperiodische Verteilung der Profilerhöhungen kann sowohl eindimensional als auch zweidimensional sein.

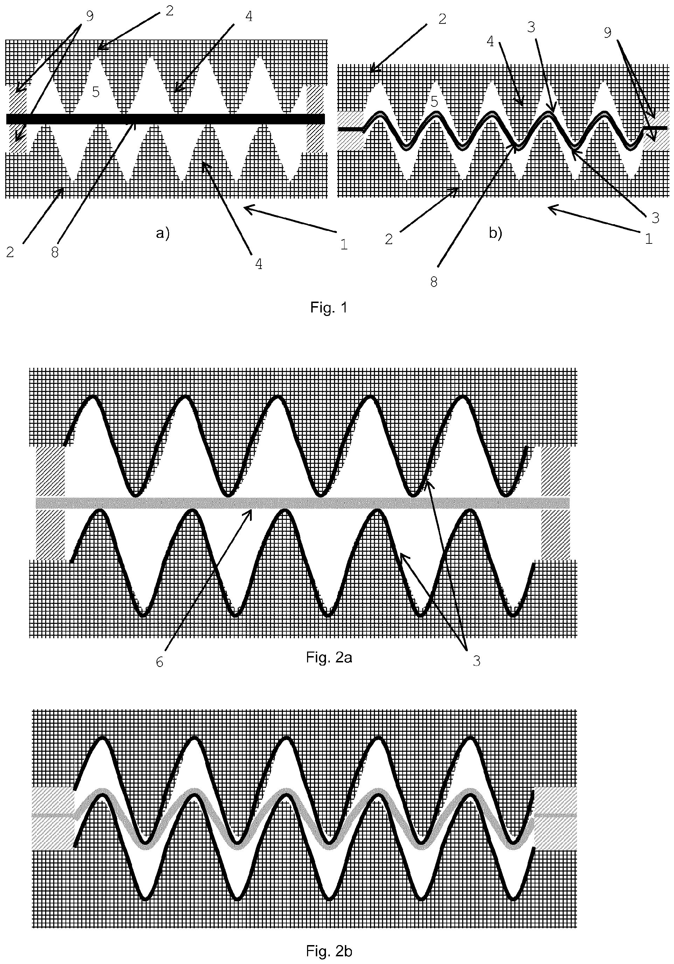

Bei Sensoren nach der ersten Variante der Erfindung ist es bei Profilen mit abgerundeten Profilerhöhungen - d.h. insbesondere bei wellenförmigen, etwa sinusförmigen Profilen - zum Erreichen einer (ggf. lokalen) maximalen und/oder möglichst gleichmäßigen Dehnung der dielektrischen Elastomerfolie bei Druckanlegung auf den Sensor von Vorteil, wenn die Profile der beiden gegenüberliegenden Elastomerschichten (ggf. lokal) weitgehend/möglichst bis vollständig komplementär ausgebildet sind. Vollständig komplementäre Profile können bei Druckanlegung auf den Sensor ganz ohne Verformung der beiden Elastomerschichten derart vollständig - mit der dazwischen liegenden dielektrischen Elastomerfolie - ineinander greifen, dass die erfindungsgemäßen Hohlräume (die im entlasteten Sensorzustand vorlagen) dabei komplett verschwinden, deren Volumen also auf Null reduziert wird (vgl. Fig. 1, 2, 5, 6).

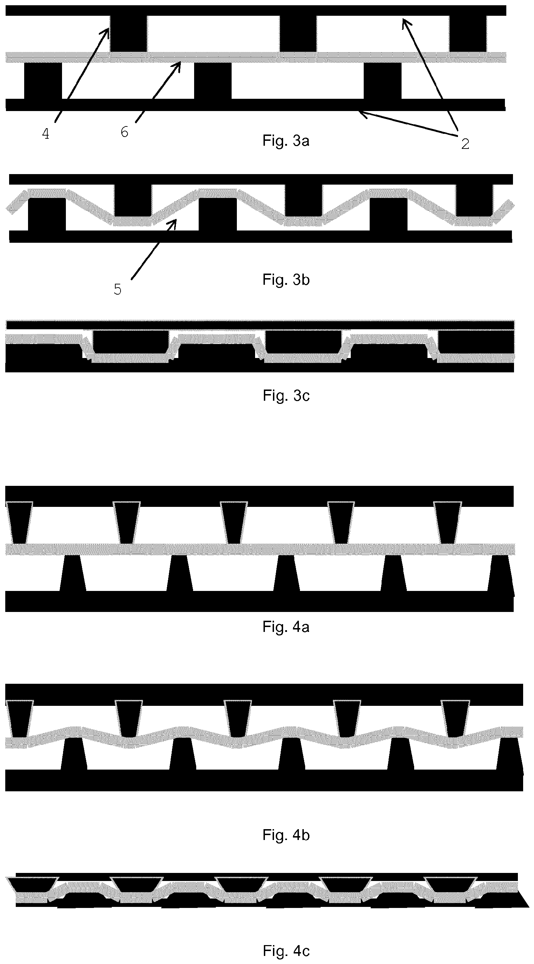

Hingegen ist es bei kantigen - etwa stegförmigen - Profilen eher günstig, dass die beiden gegenüberliegenden Profile nicht vollständig, sondern nur teilweise zueinander komplementär ausgebildet sind. D.h. die gegenüberliegenden Profile greifen zwar bei deren vollständigem Zusammenführen ohne Verformung/Stauchung der beiden Elastomerschichten ineinander, jedoch bleiben dabei Resthohlräume bestehen. In der Regel würden in diesem Fall die beiden nicht verformten Elastomerschichten bei deren vollständiger Zusammenführung (d.h. wenn keine Elastomerfolie dazwischen liegen würde) z.B. im Bereich von Spitzen einiger oder aller Erhöhungen aneinander anliegen, während seitlich zwischen den benachbarten zu verschiedenen Elastomerschichten gehörenden Erhöhungen Hohlraumvolumen übrig bleiben würde. Auf diese Weise kann eine mechanisch schonende Führung der dielektrischen Elastomerfolie zwischen den ineinander greifenden kantigen Profilen gewährleistet werden (vgl. Fig. 3).

Grundsätzlich können die beiden gegenüberliegenden Profile aber bei jeder Profilform sowohl nur teilweise als auch weitgehend oder vollständig komplementär zueinander ausgebildet sein.

Eine mögliche bevorzugte Ausführungsform besteht darin, dass teilweise bis weitgehend komplementäre Profile der beiden gegenüberliegenden Elastomerschichten so geformt sind, dass die verformte/gedehnte Elastomerfolie im maximal belasteten Sensor gerade den verbleibenden Zwischenraum zwischen den Profilen ausfüllt, ohne dabei gequetscht zu werden, sodass aber kein (gasgefüllter) Hohlraum mehr übrig bleibt.

In einem entlasteten Zustand der Sensormatte nach der ersten Variante der Erfindung sollte die dielektrische Folie vorzugsweise nicht oder höchstens geringfügig gedehnt sein. Erst beim Zusammendrücken der Sensormatte wird die dielektrische Elastomerfolie durch das Ineinandergreifen der Erhöhungen und der gegenüberliegenden Vertiefungen der Elastomerschichten in einer definierten Weise derart stark verformt, dass sich ihre Kapazität, die vorzugsweise nach dem Ort in der Mattenfläche aufgelöst messbar ist, drastisch erhöht, weil sich sowohl der Elektrodenabstand verringert als auch gleichzeitig die Elektrodenfläche vergrößert. Diese Kapazitätserhöhung kann mit einem einfachen Messverfahren erfasst werden, das an sich bekannt ist.

Zur Vergrößerung der Elektrodenfläche weist die dielektrische Elastomerfolie in einem und demselben Flächensegment vorzugsweise einen Stapel aus alternierenden Elastomer- und Elektrodenschichten als einen Mehrschichtaufbau auf, wobei jeweils jede zweite Elektrodenschicht elektrisch miteinander verbunden wird. Dadurch entsteht in diesem Flächensegment ein Elektrodenpaar mit einer um ein vielfaches erhöhten Elektrodenfläche. Dabei wird eine ungerade Anzahl von Elektrodenschichten bevorzugt, wobei die erste und die letzte Elektrodenschicht auf Massepotential gelegt werden können. Vorzugsweise besitzen mehrere oder sogar sämtliche Elektrodenpaare der dielektrischen Elastomerfolie einen derartigen Mehrschichtaufbau. Entsprechendes gilt auch für die Elastomerfolie gemäß weiter unten folgenden Varianten der Erfindung.

Insbesondere für die Verwendung des beschriebenen Aufbaus nach der ersten (bzw. weiter unten folgenden zweiten) Variante der Erfindung als Drucksensormatte können sich elastisch verformbare Abstandshalter (elastisch komprimierbare Körper) zwischen den beiden Elastomerschichten als nützlich erweisen, die die beiden Elastomerschichten im entlasteten Zustand der Sensormatte in einem definierten Abstand zueinander halten. Dadurch wird vor allem gewährleistet, dass die dielektrische Elastomerfolie im entlasteten Zustand der Sensormatte nicht gedehnt ist. Ferner lässt sich mittels solcher Abstandshalter der an der Matte anliegende zu ermittelnde Druck in eine definierte Verformung der Abstände zwischen den Elastomerschichten und damit in eine definierte Dehnung der Folie und mithin in eine entsprechend definierte bzw. interpretierbare Kapazitätsänderung überführen. (Ergänzend oder alternativ hierzu kann auch eine Rückstellkraft durch die elastisch verformte dielektrische Elastomerfolie genutzt/berücksichtigt werden, vgl. insbesondere die weiter unten folgenden Varianten der Erfindung.)

Elastisch verformbare Abstandshalter bzw. deren räumliche Anordnung in der Sensormatte sind beispielhaft in den Figuren 1, 2, 5 und 6 bis 9 (überwiegend im senkrechten oder waagerechten Querschnitt) gezeigt. Durch die Materialauswahl (Härte) und die geometrische Form der Abstandshalter kann die Kennlinie der flexiblen Sensormatte eingestellt bzw. gezielt beeinflusst werden.

Vorzugsweise sind die Abstandshalter jeweils an einer der beiden Elastomerschichten befestigt, z.B. verklebt. Bevorzugt bestehen die Abstandshalter aus dem gleichen Material wie die jeweilige Elastomerschicht und können z.B. zusammenhängend mit dieser als ein Stück hergestellt sein. Alternativ können die elastischen Abstandshalter auch als Federn, z.B. Metallfedern gewünschter Härte, ausgebildet sein. Vorzugsweise stoßen die Abstandshalter, die jeweils mit einer der beiden Elastomerschichten verbunden sind, paarweise aufeinander, getrennt allein durch die Elastomerfolie.

Ferner können die Abstandshalter und/oder die Profilerhöhungen der Elastomerschichten alternativ oder zusätzlich an der dielektrischen Elastomerfolie befestigt sein. Dies hat Vorteile für eine definierte Verformung der dielektrischen Elastomerfolie bei einer Deformation der Sensormatte, denn die Folie ist in diesem Fall in den Bereichen der Abstandshalter bzw. der Profilerhöhungen an diesen fixiert und kann sich daher nicht unkontrolliert seitlich verschieben. Dies hat vor allem für präzise nach dem Ort aufgelöste Druckmessungen mit der Sensormatte offensichtliche Vorteile.

In einem einfachen Fall weisen die Abstandshalter in einer Richtung senkrecht zur Sensormatte eine konstante Querschnittsfläche auf. Bei einer bevorzugten Ausgestaltung verjüngt sich diese zur dielektrischen Elastomerfolie hin. Eine solche Verjüngung hat unter anderem bei an der Elastomerfolie befestigten Abstandshaltern den Vorteil, dass durch die Verjüngung ein größerer Teil der Elastomerfolienfläche für die Druck- bzw. Deformationsmessung zur Verfügung steht.

Des Weiteren sind die Profilerhöhungen der Elastomerschichten und/oder die Abstandshalter an deren an der dielektrischen Elastomerfolie anliegenden Enden/Spitzen vorzugsweise abgerundet ausgebildet. Dadurch wird die Folie vor möglichen Beschädigungen geschützt.

Die Oberflächenprofile der beiden Elastomerschichten sind insbesondere bei den Ausführungsformen nach der ersten Variante vorzugsweise periodisch ausgebildet. Wie weiter oben ausgeführt, kann die Periodizität eindimensional, besonders bevorzugt zweidimensional sein. Das jeweilige periodische Oberflächenprofil kann beispielsweise eine Sinus- oder andere Wellenform oder eine Dreiecks- oder Trapezform aufweisen; periodische Oberflächenprofile weisen vorzugsweise zumindest näherungsweise eine Sinus- oder Dreiecksform auf. Alternativ kann ein Profil auch durch rechtwinklig ausgebildete Stege oder Stufen, d.h. bei zweidimensionaler Ausführung kastenförmig, gebildet sein.

Das Verhältnis der maximalen Profilhöhe zu einem Abstand von einer Erhöhung zu der nächsten - bei einer periodischen Ausgestaltung zur Periodenlänge - beträgt in der Regel mindestens 0,1, bevorzugt mindestens 0,2 und besonders bevorzugt mindestens 0,5. Je höher dieses Verhältnis im angegebenen ausführbaren Bereich ist, desto stärker kann die zwischen den Elastomerschichten eingespannte dielektrische Folie verformt werden, d.h. umso größer ist der Messbereich für die Kapazitätsmessung und damit für die Bestimmung des Drucks oder der Deformation mit der Sensormatte.

Vorzugsweise weist die stark dehnbare Elastomerfolie eine Dicke von 1 mm oder weniger, bevorzugt unter 500 µm, besonders bevorzugt unter 250 µm auf.

Ferner haben die Elektroden vorzugsweise eine Dicke von 100 µm oder weniger, bevorzugt unter 50 µm, besonders bevorzugt unter 25 µm.

Die stark dehnbare Elastomerfolie lässt sich vorzugsweise entlang der Folienfläche um mindestens 10 % der Folienfläche, bevorzugt um mindestens 30 %, weiter bevorzugt um mindestens 50 %, besonders bevorzugt um mindestens 100 % dehnen.

Vorzugsweise beträgt die Dicke der Sensormatte nach der ersten Variante 10 mm oder weniger, bevorzugt liegt sie unter 5 mm, besonders bevorzugt unter 3 mm. Dies gilt auch für die Dicke der jeweiligen Elastomerschicht, die vorzugsweise jedoch noch dünner, etwa unter 2,5 mm, vorzugsweise unter 1,5 mm, gewählt wird.

Eine bezüglich der stark dehnbaren Elastomerfolie außen liegende Elektrodenschicht der dielektrischen Elastomerfolie ist außenseitig vorzugsweise mit mindestens einer ebenfalls stark dehnbaren und elektrisch nichtleitfähigen Schutzschicht beschichtet. Eine solche Schutzschicht kann die jeweilige Elektrode z.B. vor mechanischen Abreibungen oder sonstigen Beschädigungen an den Berührungsstellen mit den Profilerhöhungen der Elastomerschichten bewahren. Auch hier sind vorzugsweise sämtliche äußeren Elektroden(schichten) mit derartigen Schutzschichten geschützt.

Aufgrund der Elastizität der Elastomerschicht(en) besteht bei einer Sensormatte nach der ersten Variante die Möglichkeit, eine je nach Bedarf mehr oder minder starke Dehnbarkeit der Sensormatte entlang der Mattenfläche zu gewährleisten. Dies ist z.B. für Anwendungen auf Betten oder Sitzflächen von besonderer Bedeutung, auf denen die flächige Sensormatte durch die Auflage nicht nur in senkrechter Richtung gestaucht sondern in der Regel auch merkbar in waagerechter Richtung gedehnt wird.

Daher ist bei einer Sensormatte nach der ersten Variante in der Regel eine gewisse Dehnbarkeit entlang der Mattenfläche gewährleistet, die je nach Erfordernissen der Anwendung lokal oder auf die Gesamtfläche der Matte bezogen beispielsweise 1 % oder mehr, insbesondere 3 % oder mehr, vorzugsweise 5 % oder mehr, besonders bevorzugt 10 % oder sogar noch mehr betragen kann.

Auch die erfindungsgemäß zur Kapazitätsmessung vorgesehenen Elektroden bzw. Elektrodenschichten sollen zumindest entsprechend der erforderlichen Dehnbarkeit der Sensormatte dehnbar ausgestaltet sein. Dies kann beispielsweise durch das Aufbringen von elektrisch leitfähigen Partikeln mit einer Dichte deutlich oberhalb der Perkolationsschwelle auf die Elastomerfolie und/oder - insbesondere bei der weiter unten folgenden zweiten Variante der Erfindung - auf eine Elastomerschicht der Sensormatte erfolgen. Die Partikel können dabei z.B. in einer konzentrierten Form als Pulver mit einem geeigneten Kleber bzw. als Paste aufgetragen werden, alternativ in einem Trägermedium, wie z.B. einem Gel oder einer Elastomer-Matrix verteilt sein und mit dem Trägermedium auf die Elastomerfolie/Elastomerschicht aufgebracht, z.B. aufgerakelt werden.

Ein Sensor nach der zweiten Variante der Erfindung hat die Ausgestaltung gemäß Anspruch 3.

Im Unterschied zu der oben dargestellten Sensormatte nach der ersten Variante mit einer dielektrischen Elastomerfolie zwischen zwei zumindest teilweise komplementären Profilen befinden sich die Elektroden bei der zweiten Variante auf den Oberflächen der Profile, bzw. sie werden von den elektrisch leitfähig ausgebildeten Elastomerschichten gebildet. Die Kapazitätsänderung ergibt sich hier daher durch die Annäherung der Elektroden auf/in den Profilen, wobei die Elastomerfolie durch die Druckausübung gedehnt wird und damit eine Rückstellkraft bei der Entlastung des Sensors ausübt (vgl. auch die ergänzende Rückstellkraft durch ggf. vorgesehene Abstandshalter weiter oben). Ein Unterschied gegenüber der ersten Variante liegt darin, dass die unbelastete Sensormatte durch den deutlich größeren Elektrodenabstand eine sehr geringe Grundkapazität aufweist, die sich bei der Belastung stark verändert. Damit ergeben sich eine erhebliche Steigerung der Kapazität bei der Belastung und eine entsprechend hohe Empfindlichkeit der Sensormatte.

Beim Zusammendrücken der Sensormatte nach der zweiten Variante wird einerseits die Elastomerfolie gedehnt. Andererseits können aber auch die Profilerhöhungen (Stege, Säulen oder Wellenberge mit verschiedenen möglichen Profilformen, siehe oben) der beiden Elastomerschichten beim Zusammendrücken gestaucht werden, wodurch sich die beiden Elektroden(schichten) ebenfalls einander annähern und damit die Kapazität erhöht.

Der Begriff "vollständig elektrisch leitfähig" soll eine laterale Strukturierung der durch die jeweilige Elastomerschicht gebildeten Elektrode zur Ausbildung von in der Sensorfläche elektrisch voneinander unabhängigen Elektroden nicht ausschließen. Vielmehr bezieht sich der Begriff "vollständig" in erster Linie auf die Dicke der Elastomerschicht. Die elektrische Leitfähigkeit kann beispielsweise durch das Ausfüllen der Elastomermatrix mit leitfähigen Partikeln mit einer Partikeldichte oberhalb der Perkolationsschwelle hergestellt werden. Geeignete Materialien, chemische Elemente und Verbindungen werden weiter unten angegeben.

Es können im erfindungsgemäßen Sensor nach der zweiten Variante beide gegenüberliegende Elastomerschichten in diesem Sinne vollständig elektrisch leitfähig sein oder beide isolierend und mit elektrisch leitfähigen Elektroden beschichtet sein, oder es kann nur eine der beiden Elastomerschichten leitfähig sein während das Profil der anderen mit einer Elektrode beschichtet ist. Mit anderen Worten sind beide Elastomerschichten mit unebenem Profil jeweils entweder leitfähig oder tragen auf der Innenseite eine (ebenfalls verformbare) leitfähige Beschichtung. Die isolierende Elastomerfolie verhindert dabei den Kurzschluss zwischen den beiden (elektrisch leitfähigen) Profilen. Beispielsweise können eine oder beide der ggf. vorhandenen Profilelektroden mit einer elektrisch isolierenden (Schutz-)Schicht beschichtet sein. In diesem Fall kann die der isolierenden Schicht auf dem Profil zugewandte Seite der Elastomerfolie auch elektrisch leitfähig sein (siehe weiter unten ausführlichere Beschreibung zur Elastomerfolie mit leitenden Eigenschaften bzw. Schichten).

Auch bei der zweiten Variante ist die Elastomerfolie im entlasteten Sensorzustand vorzugsweise nicht oder wenig verbogen/gedehnt, sondern flach zwischen den Profilen eingespannt. Inwieweit sich die Profilerhöhungen beim Druck auf die Sensormatte bereits stauchen lassen, bevor der jeweilige Vorsprung des einen Profils mit der daran anliegenden Elastomerfolie an der gegenüberliegenden Vertiefung des gegenüberliegenden Profils angestoßen hat, hängt von dem Verhältnis der elastischen Eigenschaften und damit der entstehenden Rückstellkräfte bei der gedehnten Elastomerfolie einerseits und bei den Profilerhöhungen der jeweiligen Elastomerschicht andererseits ab. Das gewünschte Kräfteverhältnis und damit die gewünschte Sensorempfindlichkeit bzw. - Kennlinie lassen sich mithin auf vielfältige Weise durch die Wahl der Aufbaugeometrie und der (Elastomer-)Materialien variieren/einstellen, je nachdem, welcher Weg für die Herstellung einfacher und günstiger ist.

Die zweite Variante des erfindungsgemäßen Sensors umfasst mithin unter anderem - jedoch nicht ausschließlich - Lösungen, bei denen Elastomerschichten mit unebenen Profilen, die bei Druckbelastung des Sensors komprimiert werden, mit einer dehnbaren Elastomerfolie kombiniert sind.

Insbesondere kann es bei der zweiten Variante nach der Erfindung daher von Vorteil sein, wenn die beiden gegenüber liegenden Profile nur teilweise komplementär zueinander sind (vgl. die obige Definition von teilweiser Komplementarität) und die Stauchung der Profilerhöhungen unter Druck zur erfindungsgemäßen Kapazitätserhöhung beiträgt. Beispielsweise können dann einige - vorzugsweise alle - Erhöhungen auf mindestens einer der beiden Elastomerschichten als Stege mit einem Aspektverhältnis von Höhe zu Dicke von mindestens 1 ausgebildet sein. Je höher die Erhöhung, desto größer ist in der Regel die (lokale) absolute Abstandsänderung zwischen den Elektroden beim Zusammendrücken der Sensormatte. Auch je schmaler die Erhöhung, desto empfindlicher kann die Sensormatte auf Druck reagieren, insbesondere weil zwischen schmalen Erhöhungen größere Hohlraumvolumina bei der Herstellung der Matte geschaffen werden können. Alternativ zu der Stegform kann eine Säulenform, beispielswese zylindrisch, mit einem Aspektverhältnis von Höhe zu Dicke, bzw. ggf. zum Durchmesser, von mindestens 1 vorliegen.

Es kann eine sich mit steigendem Abstand von der zugehörigen Elastomerschicht verjüngende Form der Stege bzw. Säulen gewählt werden, was beispielsweise für die mechanische Stabilität der Matte von Vorteil sein kann.

Die Profiltiefe kann bei einer oder ggf. bei beiden Elastomerschichten in der Regel 0,3 oder mehr der Gesamtdicke der jeweiligen Elastomerschicht betragen, vorzugsweise mindestens 0,5, besonders bevorzugt mindestens 0,7. Die durchgehende/ununterbrochene Elastomerschicht ist im Wesentlichen eine Trägerschicht und dient daher vor allem der mechanischen Stabilität, dem Zusammenhalt und ggf. der Dehnbarkeit der Sensormatte. Für die Funktionalität der Sensormatte als Druck- und Verformungssensor sind dabei jedoch möglichst stark ausgeprägte Profilerhöhungen im Verhältnis zur Gesamtdicke der Elastomerschicht von Vorteil.

Der in der Sensormatte nach der zweiten Variante ohne Druckbelastung - d.h. in der Regel im Zustand mit einer flachen und ungedehnten Elastomerfolie zwischen den beiden Profilen - vorliegende gesamte Hohlraum zwischen den Erhöhungen bzw. um die Erhöhungen herum hat vorzugsweise mindestens das doppelte Volumen, welches von den Erhöhungen selbst eingenommen wird. Je größer das entsprechende relative Hohlraumvolumen, desto stärker lassen sich die Erhöhungen stauchen, d.h. umso empfindlicher wird die Kapazitätsmessung und somit die Verformungs- oder Druckermittlung.

In jedem Falle sollten die auf Profiloberflächen aufgetragenen Elektroden den bestimmungsgemäßen Verformungen der jeweiligen Elastomerschicht ohne Beeinträchtigung der elektrischen Leitfähigkeit folgen können, d.h. ggf. in gewissen Grenzen dehnbar sein etc. Anwendbar sind z.B. Herstellungsmethoden wie bei stark dehnbaren dielektrischen Elastomerfolien. Das Gleiche gilt für bestimmungsgemäße Verformungen, ggf. auch für lokale Dehnungen oder Verformungen, einer vollständig leitfähigen Elastomerschicht, d.h. auch hier sollte die Überschreitung der Perkolationsschwelle der Partikeldichte dementsprechend ausreichend hoch sein.

Vorzugsweise weisen die Elektrodenschichten bei Ausführungsformen mit mindestens einer (dünnen) Elektrodenschicht jeweils eine Dicke von 100 µm oder weniger, bevorzugt unter 50 µm, besonders bevorzugt unter 25 µm auf.

Die Elastomerfolie kann bei der zweiten Variante eine elektrisch nicht leitfähige Elastomerfolie ohne Elektrodenschichten sein. Eine weitere Ausführungsform dieses Ansatzes besteht darin, dass die dehnbare Elastomerfolie in der Mitte eine leitfähige Schicht enthält, die eine Elektrode darstellt. In diesem Fall können die beiden leitfähigen Elastomerschichten mit unebenem Profil bzw. die beiden leitfähigen Beschichtungen auf den Elastomerschichten mit unebenem Profil zusammen auf Massepotential geschaltet werden.

Die Elastomerfolie nach der zweiten Variante enthält somit vorzugsweise eine Elektrodenschicht in ihrem Inneren, d. h. eine leitfähige Elektrodenschicht befindet sich zwischen zwei äußeren isolierenden Elastomerfolienschichten der stark dehnbaren Elastomerfolie. Die beiden Elektroden(schichten) auf den Oberflächen bzw. in der Dicke der Profile werden dabei vorzugsweise auf Massepotential gelegt. Die Kapazität wird dann jeweils zwischen der inneren Elektrode in der Elastomerfolie und dem Massepotential gemessen. Es können bei dieser Ausführungsform auch zwei (oder mehr) übereinander liegende und voneinander elektrisch isolierte Elektrodenschichten im Inneren der Elastomerfolie vorgesehen sein, mit denen beispielsweise jeweils Kapazitätsmessungen mit Beteiligung nur einer der beiden elektrodierten bzw. elektrisch leitfähigen Elastomerschichten der Sensormatte vorgenommen werden können. Unabhängig davon und zusätzlich kann auch hier - wie in allen anderen Fällen nach der Erfindung - eine laterale Strukturierung der jeweiligen Elektrode insbesondere zum Zwecke einer ortsaufgelösten Druckbestimmung vorgesehen sein.

Allgemeiner kann die Elastomerfolie einen Mehrschichtverbund aus (zwei oder mehr) elektrisch leitenden und nicht leitenden Schichten darstellen. Dabei können entweder beide äußeren Schichten der Elastomerfolie leitend sein oder beide nicht leitend oder die eine leitend und die andere nicht leitend. Bei Ausführungsformen mit mindestens einer elektrisch leitenden äußeren Schicht auf der Elastomerfolie ist das dieser Schicht zugewandte Profil der entsprechenden Elastomerschicht (ggf. jeweils) zur Vermeidung eines elektrischen Kurzschlusses mit einer elektrisch isolierenden Schicht überzogen/bedeckt.

Die Elastomerfolie kann auch - ggf. lateral strukturiert - elektrisch leitend ausgebildet sein, zB. durch Füllung mit metallischen Partikeln mit einer Partikeldichte weit oberhalb der Perkolationsschwelle. Auch in diesem Fall sind die elektrisch leitenden Profile der beiden Elastomerschichten zur Vermeidung eines Kurzschlusses jeweils mit einer isolierenden Schicht bedeckt.

Bei einer oder mehreren Elektrodenschichten im Inneren der Elastomerfolie weist die Elastomerfolie in Bezug auf eine oder mehrere Elektrodenschichten im selben Flächensegment vorzugsweise (ggf. jeweils) einen Satz von einer vorzugsweise ungeraden Anzahl von Elektrodenschichten, welche durch elektrisch nichtleitfähige Schichten voneinander isoliert und alternierend zu (ggf. jeweils) einer einzigen Elektrode mit dem (ggf. jeweiligen) entsprechenden elektrischen Potential verbunden sind, als Mehrschichtaufbau auf.

Im Übrigen gelten die obigen Ausführungen zu der ersten Variante auch in Bezug auf die zweite Variante des erfindungsgemäßen Sensors entsprechend, d.h. insbesondere gilt das oben in Bezug auf die dielektrische Elastomerfolie gemäß der ersten Variante Gesagte entsprechend für die (einfache) Elastomerfolie gemäß der zweiten Variante etc.. Insbesondere sind auch beim Sensor nach der zweiten Variante vorzugsweise die oben beschriebenen elastischen Abstandshalter zwischen den beiden Elastomerschichten vorgesehen bzw. ist die Sensormatte vorzugsweise in gewissen Grenzen lateral dehnbar ausgebildet. Auch die obigen Beispiele für die Formen der beiden einander gegenüber liegenden Profile der zwei Elastomerschichten gelten genauso für die zweite Variante der Erfindung.

Die Elastomerfolie kann einen Mehrschichtverbund aus (zwei oder mehr) elektrisch leitenden und nicht leitenden Schichten darstellen. Dabei können entweder beide äußeren Schichten der Elastomerfolie leitend sein oder beide nicht leitend oder die eine leitend und die andere nicht leitend. Bei Ausführungsformen mit einer elektrisch leitenden äußeren Schicht auf der der topografischen Oberfläche zugewandten Seite der Elastomerfolie ist die Elektrode der topografischen Oberfläche mit einer elektrisch isolierenden Schicht zur Vermeidung eines elektrischen Kurzschlusses überzogen/bedeckt.

Die Elastomerfolie kann auch - ggf. lateral strukturiert - elektrisch leitend ausgebildet sein, zB. durch Füllung mit metallischen Partikeln mit einer Partikeldichte weit oberhalb der Perkolationsschwelle. Auch in diesem Fall ist die Elektrode der topografischen Oberfläche zur Vermeidung eines Kurzschlusses mit einer isolierenden Schicht bedeckt.

In einem einfachen Fall weist der Sensor zB eine (flächige) Grundplatte auf, deren Oberseite eine besonders ausgewählte Oberflächentopographie besitzt. Diese topographische Oberfläche ist mit einer leitfähigen Elektrode beschichtet. In geringem Abstand zur höchsten Erhebung der topographischen Oberfläche ist dabei eine flächige Elastomerfolie beispielsweise waagrecht in einen Rahmen gespannt und trägt auf der von der Grundplatte abgewandten Oberseite eine Elektrodenschicht. Ferner ist die Elektrodenschicht vorzugsweise auf deren von der Elastomerfolie abgewandten Oberseite mit einer nichtleitenden Schutzschicht bedeckt, die sie sowohl mechanisch als auch elektrisch nach außen schützt. Die Grundplatte kann dabei starr oder flexibel sein, d.h. z.B. aus Glas, Kunststoff oder einem anderen starren Festkörper oder aber aus einem flexiblen Elastomermaterial aufgebaut sein.

Im Allgemeinen kann die Elastomerfolie in einem unbelasteten Zustand des Sensors in geringem Abstand zu einem Teilbereich (zB zu einer oder mehreren Erhebungen) der topographischen Oberfläche angeordnet sein oder an einem Teilbereich (zB an einer oder mehreren Erhebungen) der topographischen Oberfläche anliegen. Das nicht leitfähige Elastomermaterial der Elastomer(grund)folie sorgt für die elektrische Isolierung der beiden Elektroden(schichten). Es sind jedoch stets Bereiche der topographischen Oberfläche vorhanden, in denen die Elastomerfolie im entlasteten Sensorzustand nicht an der topographischen Oberfläche anliegt, so dass komprimierbare Hohlräume gemäß der Erfindung dazwischen liegen.

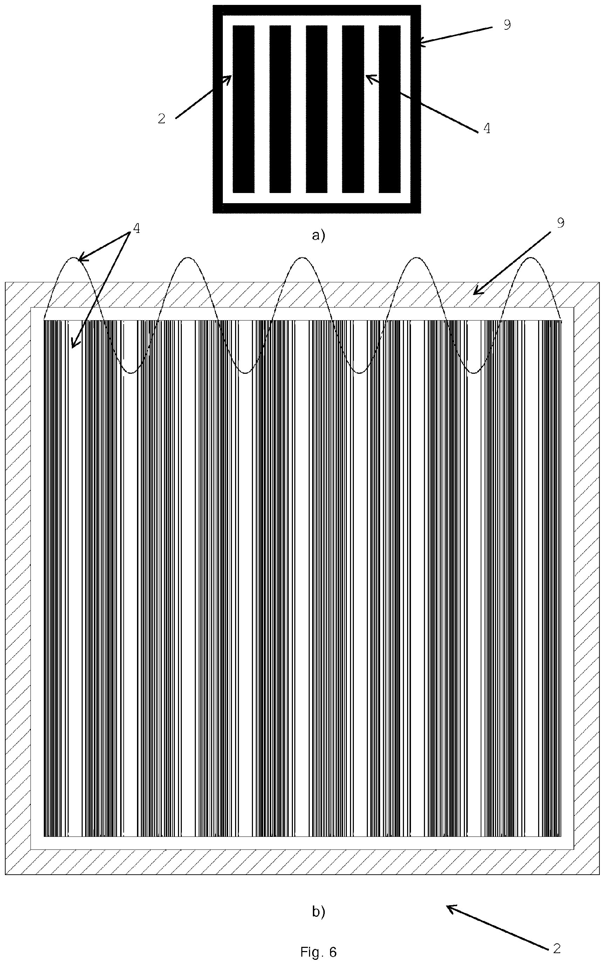

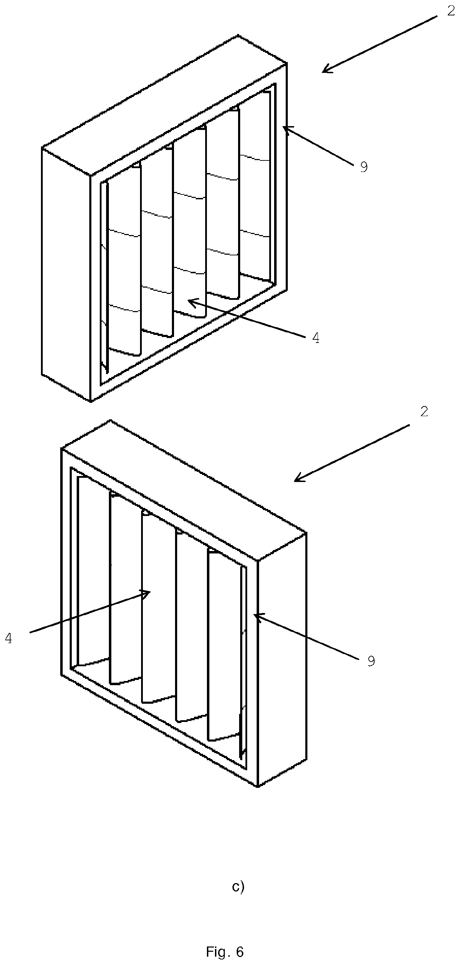

Durch die Einwirkung eines Druckes auf die Elastomerfolie nähert sich diese der topographischen Oberfläche und wird mit steigendem Druck gegen diese immer mehr angedrückt. Dabei steigt die elektrische Kapazität, die zwischen den beiden Elektroden auf der topographischen Oberfläche und auf der Elastomerfolie gemessen wird, rasch an. Die Elastomerfolie berührt in der Regel zuerst den höchsten Punkt der topographischen Oberfläche - z.B. in deren Mitte (vgl. Fig. 6) oder im Randbereich - und legt sich mit steigendem Druck auf einer zunehmend größeren Fläche an die topographische Oberfläche an. Auf den Flächensegmenten, auf denen die Folie an der topographischen Oberfläche anliegt, nimmt die Kapazität den maximalen Wert an, der durch den minimalen Abstand zwischen den beiden Elektroden, d. h. durch die Dicke der Elastomergrundfolie, bestimmt wird. Die Elastomergrundfolie verhindert damit auch den elektrischen Kurzschluss zwischen den beiden Elektroden. Eine Drucksteigerung kann solange gemessen/detektiert werden, bis die Elastomerfolie auf der gesamten Fläche der Elektrode auf der topographischen Oberfläche anliegt. Eine weitere Annäherung und damit verbundene Kapazitätssteigerung ist dann nicht mehr möglich.

Besondere Vorteile eines solchen Sensorprinzips liegen in einer hohen Variabilität und Anpassbarkeit der Empfindlichkeit und der Kennlinie. Die Empfindlichkeit wird durch die Steifigkeit der gesamten Elastomerfolie einschließlich der Elektrodenschicht und ggf. der Schutzschicht bestimmt, die sowohl von der Materialauswahl als auch von den geometrischen Maßen wie Foliendicke und Folienfläche abhängt. Die Kennlinie des Sensors, d. h. die Abhängigkeit der Kapazität vom angelegten Druck, lässt sich in sehr variabler Weise durch die Form der topographischen Oberfläche bestimmen. Eine flache Topographie führt dazu, dass sich die Elastomerfolie schon bei relativ geringem Druck weitgehend an die topographische Oberfläche anlegt. Eine Topographie mit steilen Flanken führt dagegen dazu, dass sich die Elastomerfolie erst bei relativ hohem Druck weitgehend an die topographische Oberfläche anlegt.

Wie bei den obigen ersten und zweiten Varianten der Erfindung übt die - in der Regel im Randbereich des flächigen Sensors - eingespannte bzw. einfach befestigte Elastomerfolie bei Druckanlegung auf den Sensor eine Rückstellkraft auf das drückende Medium aus, die den Sensor bei dessen Entlastung zurück in die ursprüngliche Lage versetzt. Zur Unterstützung der Rückstellung kann im Sensor ein zusätzliches elastisches Element, zB eine Feder oder ein Elastomerkörper, vorgesehen sein.

Ein solcher Drucksensor kann beispielsweise vorteilhaft als Füllstandssensor zur Messung der Füllhöhe von Flüssigkeiten eingesetzt werden. Ein weiteres Einsatzgebiet besteht in der Messung von Gasdrücken oder von Differenzdrücken von Gasen. Auch Auflagedrücke von dispersen Stoffen wie Pulvern sind mit dem beschriebenen Sensorprinzip messbar.

In allen Fällen und Varianten nach der Erfindung wird vorzugsweise durch eine Strukturierung der Elektrodenfelder/Elektroden/Elektrodenschichten erreicht, dass der auf dem Sensor anliegende Druck ortsaufgelöst an verschiedenen Stellen, d.h. in verschiedenen Flächensegmenten des flächigen Sensors, gemessen werden kann. Die jeweilige Elektrodenschicht ist in diesem Fall in elektrisch voneinander getrennte oder miteinander verbundene, zu verschiedenen Elektrodenpaaren gehörende Unterstrukturen unterteilt. In einem einfachen Fall entsteht auf diese Weise entlang der Fläche des Sensors ein ein- oder zweidimensionales Sensorarray. Es kann aber auch eine andere, z. B. unregelmäßige, Anordnung von mehreren Sensorflächen, d.h. Elektrodenpaaren, vorliegen.

Die Wahl einer konkreten Geometrie einer solchen Flächen-Strukturierung der Elektrodenschichten hängt von den Erfordernissen der Anwendung ab, wie z.B. von der erforderlichen Feinheit der Ortsauflösung der zu detektierenden bzw. zu messenden Druckverteilung oder von der Art und Form der erwarteten Druck- oder Deformationsverteilung in der Sensorfläche. Die Realisierung eines gewünschten Strukturierungsmusters kann in einer an sich bekannten Weise erfolgen, z.B. durch mithilfe einer Maske erfolgendes Auftragen von Elektrodenschichten auf die zu elektrodierende Oberfläche. Auch das Aufsprühen oder ein Siebdruck statt einer Maske können hierzu verwendet werden.

Vorzugsweise weist der erfindungsgemäße Sensor mindestens zwei Paare von Elektroden in verschiedenen Flächensegmenten auf. Besonders bevorzugt ist eine ein- oder zweidimensionale periodische Array-Anordnung von Elektrodenpaaren über die Sensorfläche. Diese lässt sich sowohl am einfachsten herstellen als auch auslesen, zudem ist durch eine periodische Anordnung eine gleichmäßige Unterteilung der Fläche des Sensors am einfachsten realisiert.

Während in der Regel, z.B. im Fall von bettlägerigen Patienten, eine Ortsauflösung von 0,01 bis 0,1 Elektrodenpaar pro cm² bereits ausreichen kann, sind mit dem erfindungsgemäßen Sensor auch erheblich feinere Ortsauflösungen von über 1 cm⁻² möglich.

Vorzugsweise sind in allen Fällen der Erfindung nichtleitfähige Schutzschichten auf einer oder mehreren der ggf. vorhandenen Elektrodenschichten zum mechanischen und/oder elektrischen Schutz der jeweiligen Elektrode vorgesehen.

In einem Sensor nach der Erfindung kann eine zur Messung der Kapazität zwischen den mindestens zwei Elektroden geeignete Kapazitätsmesseinrichtung vorgesehen sein. Die Kapazitätsmesseinrichtung stellt in einem einfachen Fall elektrische Zuleitungen, wie etwa Metalldrahtverbindungen, zu den mindestens zwei Elektroden oder elektrische Anschlüsse hierfür dar. Damit können zwischen den Elektroden beispielsweise Spannung angelegt und Strom gemessen werden. Alternativ kann die Kapazitätsmessung auch per Funkübertragung erfolgen. In diesem Fall kann die Kapazitätsmesseinrichtung einen oder mehrere, z.B. in dem Sensor angeordnete, Transponder aufweisen.

Bei allen Ausgestaltungen des erfindungsgemäßen Sensors können die Elektrodenschichten bzw. die Elektroden leitfähige Partikel aus Kohlenstoff wie Graphit, Graphen oder Carbon Nanotubes, Metalle wie Aluminium, Eisen, Kupfer, Silber oder Gold oder leitfähige Polymere wie Polyanilin, Polyacetylen, Polypyrrol, Polyparaphenylen oder Polythiophen enthalten. Die Partikeldichte sollte dabei oberhalb der Perkolationsschwelle liegen.

Die Elastomerfolie und/oder eine ggf. vorhandene Elastomerschicht bzw. eine der Elastomerschichten kann/können Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), Chlorsulfoniertes Polyethylen (CSM), Acrylnitril-Butadien (NBR), Hydriertes Acrylnitril-Butadien (HNBR), einen Fluorkautschuk wie Viton, ein thermoplastisches Elastomer wie thermoplastische Styrol-Copolymere (Styrol-Butadien-Styrol- (SBS-), Styrol-Ethylen-Butadien-Styrol- (SEBS-), Styrol-Ethylen-Propylen-Styrol- (SEPS-), Styrol-Ethylen-Ethylen-Propylen-Styrol- (SEEPS-) oder Styrol-Isopren-Styrol-(SIS-) Copolymer), teilvernetzte Blends auf Polyolefin-Basis (aus Ethylen-Propylen-Dien-Kautschuk und Polypropylen (EPDM/PP), aus Nitril-Butadien-Kautschuk und Polypropylen (NBR/PP) oder aus Ethylen-Propylen-Dien-Kautschuk und Polyethylen(EPDM/PE)) oder thermoplastische Urethan-Copolymere (aromatisches Hartsegment und Ester-Weichsegmernt (TPU-ARES), aromatisches Hartsegment und Ether-Weichsegment (TPU-ARET) oder aromatisches Hartsegment und Ester/Ether-Weichsegment (TPU-AREE)) enthalten. Sie kann/können aus einem dieser Materialien bestehen. Kombinationen von zwei oder mehr verschiedenen diesen Materialien in einer ggf. vorhandenen Elastomerschicht sind ebenfalls möglich. Das gleiche gilt entsprechend für die Elastomerfolie.

Die Elastomerfolie und/oder eine ggf. vorhandene Elastomerschicht bzw. eine der Elastomerschichten kann elektrisch polarisierbare Partikel wie Bariumtitanat, Bleizirkonattitanat oder Titandioxid und/oder elektrisch leitfähige Partikel aus Kohlenstoff wie Graphit, Graphen oder Carbon Nanotubes, Metalle wie Eisen, Kupfer, Silber oder Gold oder leitfähige Polymere wie Polyanilin, Polyacetylen, Polypyrrol, Polyparaphenylen oder Polythiophen oder eine organische Modifizierung zur Erhöhung der Permittivität enthalten. Die Partikeldichte der elektrisch leitenden Partikel muss dabei bei nicht elektrisch leitfähigen Elastomerschichten unterhalb der Perkolationsschwelle bleiben, oder aber man verwendet mit einem Isolator beschichtete Partikel.

Sämtliche Einzelkombinationen aus diesen drei Listen in einem erfindungsgemäßen Sensor sind möglich und sollen daher als offenbart gelten.

Elastomerfolien, Elektrodenschichten bzw. ggf. vorgesehene Elastomerschichten bei erfindungsgemäßen Sensoren können beispielsweise durch Rakeln, Formgießen, Spritzgießen bzw. Sprühen hergestellt sein.

Ein weiterer Aspekt der Erfindung ist ein Drucksensor oder ein Drucksensor-Array, Dehnungssensor oder Dehnungssensor-Array, Verformungssensor oder Verformungssensor-Array aus einem Sensor nach der Erfindung, wobei die Veränderung der Kapazität zwischen den mindestens zwei Elektroden gemessen wird. Ein solcher Sensor bzw. ein solches Sensorarray kann direkt zur Ansteuerung eines Airbags oder eines anderen Geräts, z.B. der Drucksteuerung bei Wechseldruckmatratzen verwendet werden. Der Sensor bzw. das SensorArray kann aber auch insbesondere mit einem Display zur vorzugsweise graphischen Anzeige der gemessenen Druck- oder Deformationsverteilung auf dem Sensor ausgerüstet sein, z.B. zur visuellen Überwachung. Alternativ kann der/das Sensor/Sensorarray mit einer computerlesbaren Software zu einer solchen Anzeige ausgestattet sein, sodass die Druck- oder Deformationsverteilung an einem externen PC oder Laptop beispielsweise zu einem späteren Zeitpunkt eingesehen werden kann.

Ein weiterer Aspekt der Erfindung ist ein Aufnahmebehälter für fluide Medien wie Flüssigkeiten, Gase, Pulver, rieselfähige Materialien oder disperse Stoffe oder für nachgiebige Medien wie Gele oder biologische Materialien, welcher Aufnahmebehälter in einer seiner Boden-, Decken- oder Seitenwände einen flächigen volumenkompressiblen kapazitiven Sensor nach der Erfindung aufweist, dergestalt dass bei der Aufnahme eines fluiden bzw. nachgiebigen Mediums im Aufnahmebehälter der Sensor den vom fluiden bzw. nachgiebigen Medium ausgeübten Druck messen bzw. angeben kann. Ein erfindungsgemäßer Aufnahmebehälter hat die Ausgestaltung gemäß Anspruch 11.

Bei einem solchen Aufnahmebehälter kann die flexible oder starre Oberfläche des Sensors mit dem Aufnahmebehälter mechanisch untrennbar, beispielsweise einstückig, ausgebildet sein. Alternativ kann der ganze Sensor vom Aufnahmebehälter abnehmbar - z.B. als Deckel oder als abnehmbarer Boden - ausgebildet sein.

Beispielsweise kann eine flexible Sensormatte nach der ersten oder der zweiten Variante als Messdeckel zur Gasdruck(differenz)messung für im erfindungsgemäßen Aufnahmebehälter aufbewahrtes Gas eingesetzt werden.

Die Erfindung richtet sich auch auf eine Verwendung des erfindungsgemäßen Sensors als flexibler Drucksensor oder als Sensorarray zur Messung von flächigen Druckverteilungen wie beispielsweise auf oder in Sitzen, Betten, Matratzen, Schuhen, Teppichen, Regalen, Vitrinen, Fußböden oder anderen Unterlagen sowie auf eine Verwendung als Deformations- und Verformungssensor oder als Füllstandssensor, Gasdruck- oder Gasdruckdifferenzsensor oder Auflagedrucksensor für fluide Medien.

Weitere Vorteile der Erfindung werden nachfolgend anhand der in den Zeichnungen und der zugehörigen Beschreibung dargestellten Ausführungsbeispiele erläutert. Diese sollen keine beschränkende Wirkung für den Erfindungsgegenstand haben, sondern als konkrete Beispiele dafür dienen. Die darin gezeigten/beschriebenen Merkmale können auch in anderen als den explizit genannten Kombinationen in einem Sensor nach der Erfindung vorliegen. Insbesondere sind die Figuren schematische Darstellungen, die nicht maßstabsgetreu zu lesen sind.

Es zeigen:
- Fig. 1: Querschnittsdarstellungen einer Sensormatte nach der ersten Variante der Erfindung mit einer zwischen zwei Elastomerschichten eingespannten dielektrischen Elastomerfolie und elastischen Abstandshaltern, in einem entlasteten (1a) und teilweise belasteten (1b) Zustand;
- Fig. 2: Querschnittsdarstellungen einer Sensormatte nach der zweiten Variante der Erfindung, bei dem zwischen zwei Elastomerschichten mit zwei Elektroden auf den Oberflächen von deren Wellenprofilen eine isolierende Elastomerfolie eingespannt ist, in einem entlasteten (2a) und teilweise belasteten (2b) Zustand;
- Fig. 3: Querschnittsdarstellungen einer Sensormatte nach der zweiten Variante der Erfindung mit zwei elektrisch leitfähigen Elastomerschichten mit stegförmigen Profilen und einer dazwischen liegenden isolierenden Elastomerfolie in einem entlasteten Zustand (3a), teilweise belasteten (3b) und maximal belasteten (3c) Zustand;
- Fig. 4: Ausführungsbeispiel nach der zweiten Variante wie in Fig. 3, jedoch mit trapezförmigen Profilen;
- Fig. 5: Ausführungsbeispiel nach der zweiten Variante wie in Fig. 2, jedoch mit einer dritten Elektrode innerhalb der isolierenden Elastomerfolie, wobei die beiden anderen Elektroden auf Massenpotential liegen;
- Fig. 6a),b): schematische Darstellungen einer Draufsicht auf eine Elastomerschicht mit einem sinusförmigen eindimensionalen Profil mit Abstandshaltern;
- Fig. 6c): eine perspektivische Darstellung zweier Elastomerschichten mit teilweise zueinander komplementären eindimensionalen Wellen-Profilen mit Abstandshaltern;
- Fig. 7: Draufsichten auf eine Elastomerschicht mit einem zweidimensionalen periodischen Profil mit (schematisch dargestellt) sinusförmigen (a) und (schematisch) trapezoder dreiecksförmigen (b) Erhöhungen und jeweils 9 elastischen Abstandshaltern auf 40 Erhöhungen/Vertiefungen;
- Fig. 8: eine Draufsicht auf eine Elastomerschicht mit einem zweidimensional periodischen Profil mit sinusförmigen Erhöhungen und 5 Abstandshaltern auf 20 Erhöhungen/Vertiefungen;
- Fig. 9: eine Draufsicht auf eine Elastomerschicht mit einem wellenförmigen zweidimensionalen Profil und 5 elastischen Abstandshaltern;
- Fig. 10a): Draufsichten auf eine eindimensional periodische Längs-Strukturierung einer Elektrodenschicht einer dielektrischen Elastomerfolie;
- Fig. 10b): Draufsichten auf eine eindimensional periodische Quer-Strukturierung einer der in Fig. 10a) dargestellten gegenüberliegenden Elektrodenschicht derselben dielektrischen Elastomerfolie;
- Fig. 11: eine Draufsicht auf eine dielektrische Elastomerfolie, die wie in Figuren 10a) und 10b) gezeigt auf ihren beiden Seiten mit jeweils einer eindimensional strukturierten Elektrodenschicht bedeckt ist.

### Bezugszeichenliste:

- 1: erfindungsgemäße Sensormatte
- 2: Elastomerschicht
- 3: ggf. strukturierte Elektrodenschicht
- 4: Erhöhung, Profil
- 5: Hohlräume
- 6: isolierende Elastomerfolie
- 7: innere Elektrode innerhalb einer isolierenden Elastomerfolie
- 8: dielektrische Elastomerfolie
- 9: elastisch komprimierbare Abstandshalter
- 10: eindimensionales Elektroden-Array
- 11: zweidimensional auslesbares Elektroden-Array

### Ausführungsbeispiel 1

Figur 1a zeigt den Aufbau eines Ausführungsbeispiels des erfindungsgemäßen Sensors (hier der erfindungsgemäßen Sensormatte) nach der ersten Variante, d.h. einer flexiblen Sensormatte 1 mit einer zwischen zwei (nicht elektrisch leitfähigen) Elastomerschichten 2 eingespannten dielektrischen Elastomerfolie 8 im vertikalen Querschnitt. Eine stark dehnbare Elastomerfolie 8 mit Elektrodenschichten 3 (in Fig. 1b gezeigt) auf deren oberer und unterer Seite befindet sich zwischen den beiden Elastomerschichten 2, die auf einer der Elastomerfolie 8 zugewandten Seite jeweils ein ausgeprägtes Profil mit Erhöhungen 4 aufweisen. Das in diesem Beispiel dargestellte Profil ist wellenförmig (d.h. insbesondere glatt/abgerundet), eindimensional periodisch. Die Profilerhöhungen können auch anders geformt und/oder verteilt sein, z.B. zweidimensional periodisch oder aperiodisch.

Auf der in Fig. 1a) linken und rechten Seite der Sensormatte 1 wird der Abstand zwischen den beiden Elastomerschichten 2 durch elastisch komprimierbare Körper (Abstandshalter) 9 eingestellt/definiert. In dem dargestellten entlasteten Zustand der Sensormatte 1 ist die dielektrische Elastomerfolie 8 nicht gedehnt. Mittels der Abstandshalter 9 werden dabei die Erhöhungen 4 der übereinander liegenden Elastomerschichten 2 davon abgehalten, ineinander einzugreifen, und liegen lediglich an der dielektrischen Elastomerfolie 8 an. Zwischen den Erhöhungen 4 befinden sich gasgefüllte Hohlräume 5. Die rechteckigen elastischen Abstandshalter 9 stoßen hier paarweise aufeinander und sind lediglich durch die dielektrische Elastomerfolie 8 voneinander getrennt.

In Figur 1b ist die Sensormatte 1 durch die Anwendung eines Druckes (teilweise) zusammengedrückt, wobei die Profile 4 der beiden Elastomerschichten 2 (teilweise) ineinandergreifen und dabei die dehnbare Elastomerfolie 8 mit den Elektroden 3 stark verformen und dadurch dehnen. Die komprimierbaren Körper 9 auf den beiden Elastomerschichten 2 sind dabei in Abhängigkeit vom wirkenden Druck auf die Sensormatte 1 in einer definierten Weise gestaucht. Beim Zusammendrücken der Sensormatte 1 sind die Erhöhungen 4 und die Folie 8 (teilweise) in die komprimierbaren Hohlräume 5 gedrungen, sodass deren Volumen gegenüber dem entlasteten Sensorzustand (Fig. 1a) reduziert ist.

In Figur 1b ist noch ein Teil des Hohlraumvolumens 5 übrig, sodass die Sensormatte 1 noch weiter zusammengedrückt werden kann, bis zu einem vollständigen Ineinandergreifen der (hier komplementären) Profile 4, was einer maximalen Dehnung der dielektrischen Elastomerfolie 8 und damit einer maximalen Kapazitätserhöhung entsprechen würde.

### Ausführungsbeispiel 2

Fig. 2 zeigt ein erstes Ausführungsbeispiel nach der zweiten Variante der Erfindung. Wie in Fig. 1 ist der erfindungsgemäße Sensor 1 (hier eine flexible Sensormatte) in seinem entlasteten (Fig. 2a) und einem teilweise belasteten (Fig. 2b) Zustand dargestellt.

Der einzige Unterschied zu dem ersten Ausführungsbeispiel aus Fig. 1 besteht darin, dass in Fig. 2 die stark dehnbare Elastomerfolie 6 keine Elektroden trägt, sondern vollständig elektrisch isolierend ist. Stattdessen befinden sich zwei Elektrodenschichten 3 auf den Oberflächen der beiden Profile 4, dazwischen wird die elektrische Kapazität gemessen. Die Folie 6 verhindert den Kurzschluss zwischen den Elektroden 3 und definiert eine maximal erreichbare Kapazität des Sensors bei vollständigem Ineinandergreifen der beiden komplementären Profile 4 unter Druck.

Im entlasteten Sensorzustand (Fig. 2a) entspricht der maximale, durch entlastete Abstandshalter 9 definierte Abstand zwischen den beiden Elektroden 3 einer minimalen elektrischen Kapazität.

Bei einer teilweisen Druckbelastung des Sensors (Fig. 2b) nähern sich die beiden Profile, deren Erhöhungen 4 dringen dabei teilweise in die Hohlräume 5 ein. Durch diese Annäherung der Elektroden 3 steigt die dazwischen gemessene Kapazität erheblich.

Die isolierende Elastomerfolie 6 sorgt in diesem Beispiel unter anderem für eine in der Sensorfläche gleichmäßig verteilte elastische Rückstellkraft, neben den elastischen Abstandshaltern 9. Durch diese Federwirkung wird die Abhängigkeit des Elektrodenabstands von dem anliegenden Druck definiert.

### Ausführungsbeispiel 3

Fig. 3 zeigt ein Ausführungsbeispiel nach der zweiten Variante der Erfindung, und zwar eine flexible Sensormatte 1, bei der im Gegensatz zu Fig. 2 die beiden Elastomerschichten 2 vollständig (bis auf eine ggf. vorgesehene laterale Strukturierung) elektrisch leitfähig sind und daher als Elektroden dienen. Dazwischen ist eine vollständig isolierende Elastomerfolie 6 angeordnet, deren Funktion derjenigen in Fig. 2 ähnlich ist.

Die in diesem Beispiel stegförmigen, rechteckigen, eindimensional periodischen Profilerhöhungen 4 der beiden Elastomerschichten 2 sind nur teilweise zueinander komplementär. Fig. 3a zeigt einen entlasteten Sensorzustand, bei dem die Elastomerfolie 6 flach und ungedehnt ist und die beiden Profile an der Folie 6 zu deren beiden Seiten anliegen.

Bei einer teilweisen Druckbelastung der Sensormatte 1 in Fig. 3b ist die Folie 6 bereits so stark gedehnt, dass die beiden gegenüberliegenden Profile 4 nahezu vollständig ineinander greifen. Dabei bleiben jedoch im Unterschied zu Fig. 2 links und rechts der Erhöhungen 4 noch Resthohlräume 5 übrig, in die sich die Erhöhungen 4 bei einer weiter ansteigenden Druckbelastung unter einer weiteren Kapazitätserhöhung stauchen lassen. Fig. 3c zeigt einen nahezu maximal belasteten Sensorzustand, in dem sowohl die Folie 6 verbogen/gedehnt ist als auch die Profilerhöhungen maximal verformt sind, was zu dem kleinstmöglichen Elektrodenabstand führt, bei dem kaum mehr Hohlräume 5 mehr vorhanden sind.

### Ausführungsbeispiel 4

Das in Fig. 4 gezeigte Beispiel nach der zweiten Variante der Erfindung unterscheidet sich von der in Fig. 3 dargestellten Sensormatte allein durch die im vertikalen Querschnitt schmalere und trapezförmige Ausgestaltung der Profilerhöhungen 4.

Wie aus dem Vergleich der Figuren 3 und 4 erkennbar, lässt sich dadurch bei einer vergleichbaren Dicke und Stabilität der erfindungsgemäßen Sensormatte 1 eine deutlich höhere relative Zusammendrückbarkeit der Sensormatte und damit eine deutlich höhere Abstandsänderung der Elektroden (= Elastomerschichten 2) zwischen dem entlasteten und dem maximal belasteten Zustand des Sensors erzielen. Dadurch wird der zugängliche Messbereich erweitert und die Sensorempfindlichkeit gesteigert.

### Ausführungsbeispiel 5

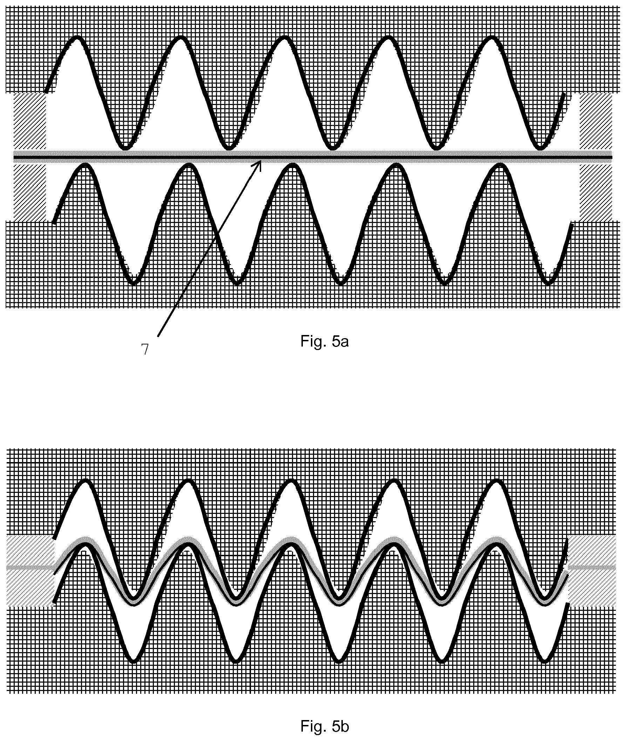

Fig. 5 zeigt ein Ausführungsbeispiel nach der zweiten Variante der Erfindung wie in Fig. 2, mit dem einzigen Unterschied, dass hier die isolierende Elastomerfolie 6 zusätzlich eine in deren Innerem verlaufende dritte Elektrode 7 aufweist. Die beiden Elektroden 3 auf den Profilen der Elastomerschichten 2 können bei diesem Beispiel auf ein Massepotential gelegt werden, sodass die elektrische Kapazität zwischen der inneren Elektrode 7 der Folie 6 und den Elektroden 3 auf den Profiloberflächen gemessen wird.

Figur 6a) zeigt rein schematisch ein Beispiel für eine Draufsicht auf eine der beiden Elastomerschichten 2 einer flexiblen Sensormatte nach der ersten oder zweiten Variante mit einem eindimensionalen sinusförmigen Profil 4. In Fig. 6b) ist das Sinusprofil detaillierter zu sehen. Am Rande der jeweiligen Elastomerschicht 2 sind elastische Abstandshalter in Form eines Außenrahmens 9 angeordnet. In Fig. 6c) sind die zueinander komplementären Elastomerschichten 2 aus Figuren 6a), 6b) in einer perspektivischen Darstellung gezeigt.

Der Außenrahmen 9 (in Fig. 6a schwarz, in Fig. 6b schraffiert) der Elastomerschicht 2 bildet einen elastischen Abstandshalter zum Einstellen eines Abstands zwischen den beiden Elastomerschichten 2 in Abhängigkeit vom auf die Sensormatte ausgeübten Druck. Beim Aufeinanderdrücken der beiden Elastomerschichten 2 wird hier der Rahmen 9 in Abhängigkeit vom wirkenden Druck definiert in der Höhe gestaucht. In Fig. 6a) sind sinusförmige Profilerhöhungen 4 (schwarz) schematisch dargestellt. In Fig. 6b) ist ein entsprechendes sinusförmiges Profil 4 genauer gezeigt.

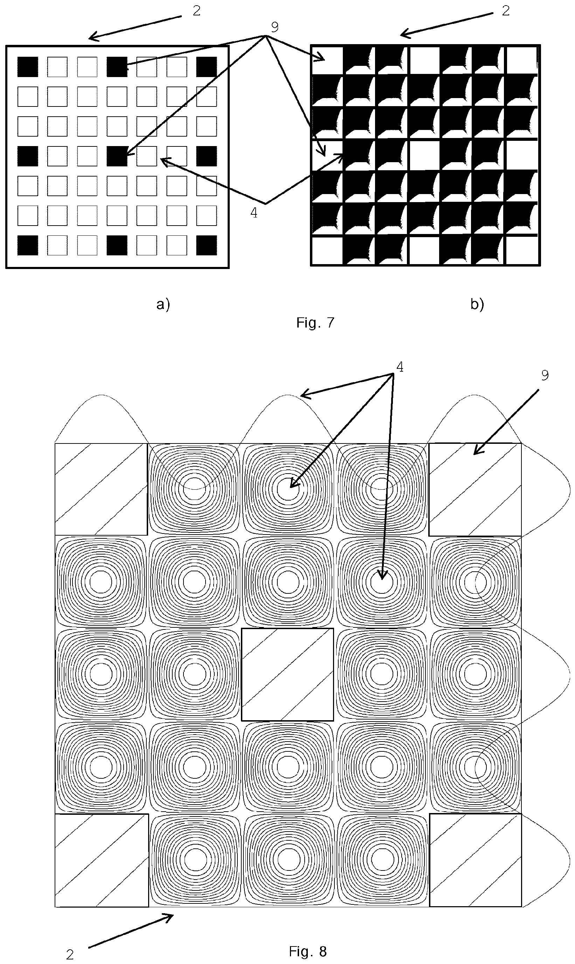

Figur 7a) zeigt rein schematisch eine Elastomerschicht 2 einer flexiblen Sensormatte 1 nach der ersten oder zweiten Variante mit einem zweidimensionalen sinusförmigen Profil. In Fig. 7a) sind die Profilerhöhungen 4 alternativ dazu dreiecksförmig/schräg/trapezförmig ausgebildet. Auch hier kann, wie in den obigen Beispielen, jeweils eine andere, z.B. abgerundete, wellen-, insbesondere sinusförmige Form der Profilerhöhungen gewählt werden, wie auch eine aperiodische Verteilung. Die elastischen Abstandshalter 9 sind hier als Säulen mit einer quadratischen Querschnittsfläche (in Fig. 7a schwarz, in Fig. 7b weiß gezeigt) ausgebildet, die die beiden Elastomerschichten 2 in der Sensormatte in einem definierten Abstand zueinander halten können/sollen. Sie sind im Randbereich und in der Flächenmitte der Elastomerschicht 2 angeordnet (neun Stück auf insgesamt 40 Vertiefungen). Beim Aufeinanderdrücken der beiden Elastomerschichten 2 werden die Abstandshalter 9 abhängig vom wirkenden Druck auf die Sensormatte 1 definiert in der Höhe gestaucht.

In Fig. 8 ist ein weiteres Beispiel einer Elastomerschicht 2 mit zweidimensional periodischen sinusförmigen Profilerhöhungen 4 vergrößert dargestellt, mit insgesamt fünf Abstandshaltern 9 in den Randbereichen und in der Mitte der Elastomerschicht 2.

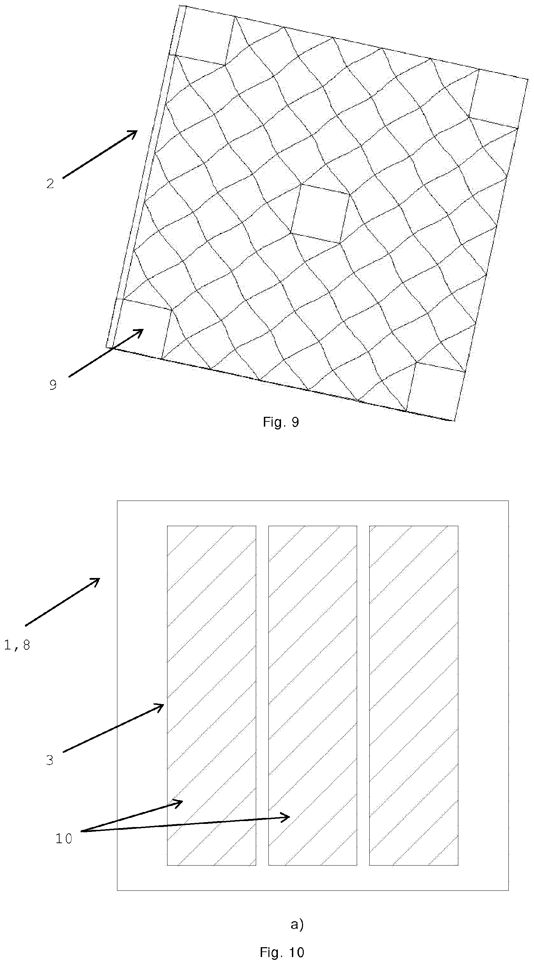

In Fig. 9 ist ein weiteres Beispiel einer Elastomerschicht 2 mit einem zweidimensional wellenförmigen Profil und fünf Abstandshaltern 9 gezeigt.

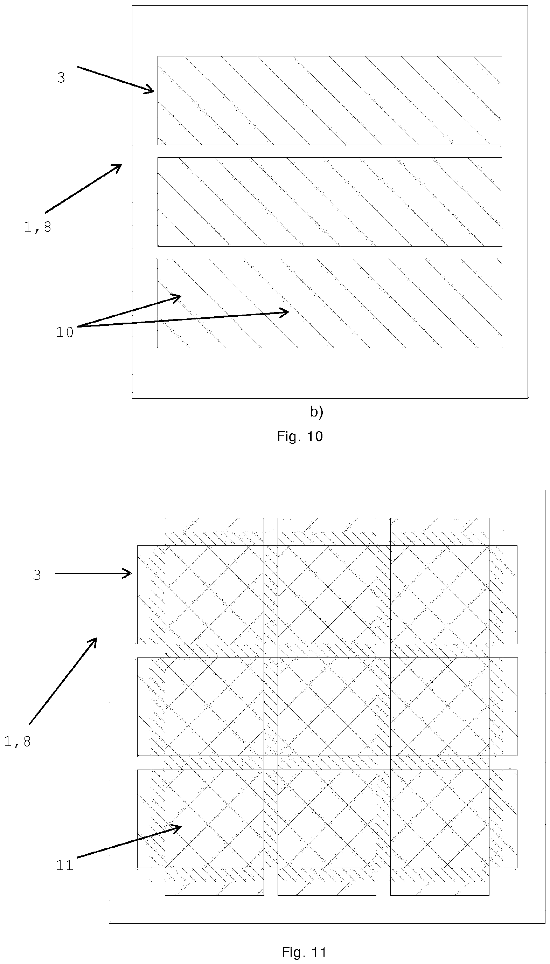

Figur 10 zeigt Draufsichten auf eine dielektrische Elastomerfolie 8 mit einer strukturierten quadratischen Elektrodenfläche 3, die ein eindimensionales rechteckiges Array 10 bildet. In Fig. 10a) sind die Elektroden 3 auf einer oberen Seite der Folie längs in der Bildebene ausgerichtet und in Fig. 10b) sind die Gegenelektroden 3 auf der Rückseite der Folie quer dazu ausgerichtet. Damit wird eine separate Druckmessung auf den einzelnen zweidimensional verteilten Elektrodenfeldern 10, 11 (vgl. Fig. 11 ermöglicht. Die Figuren 10a und 10b können insbesondere als Beispiele für die Draufsicht auf eine Sensormatte 1 nach der ersten oder zweiten Variante, d.h. mit den an einer Elastomermatte innenseitig oder an einer dielektrischen Elastomerschicht angebrachten strukturierten Elektrodenschichten 3, gelesen werden.

Figur 11 zeigt eine Draufsicht auf eine dielektrische Elastomerfolie 8, beidseitig jeweils mit einer eindimensional strukturierten Elektrodenfläche 3, die ein zweidimensionales Elektrodenpaar-Array 11 bildet. Damit wird eine separate Kontaktierung und damit Kapazitätsmessung auf den einzelnen Elektrodenfeldern 11 ermöglicht. Wie Figur 10, kann auch diese Figur als Beispiel für die Sensormatte 1 nach der ersten oder zweiten Variante gesehen werden.

## Patentansprüche

1. Flächiger volumenkompressibler kapazitiver Sensor (1) zur Messung von Druck oder zur Messung oder Detektion von Deformationen, der zumindest auf einer seiner äußeren Flächenseiten flexibel und dadurch für Druck und/oder Deformationen ortsabhängig verformbar ausgebildet ist, aufweisend
- mindestens zwei Elektroden (3), zwischen denen die elektrische Kapazität gemessen werden kann,
- eine erste Elastomerschicht (2), deren eine Oberfläche ein unebenes Profil mit Erhöhungen oder Vertiefungen (4) aufweist,
- eine zweite Elastomerschicht (2), die in Richtung senkrecht zu der ersten Elastomerschicht (2) über der ersten Elastomerschicht angeordnet ist und deren der ersten Elastomerschicht zugewandte Oberfläche ein unebenes Profil (4) aufweist, das zum Profil (4) der ersten Elastomerschicht teilweise, weitgehend oder vollständig komplementär ist, derart dass bei einer Druckbelastung des Sensors die Erhöhungen und Vertiefungen der einander gegenüber angeordneten Profile der beiden Elastomerschichten zumindest teilweise ineinandergreifen,
- eine stark dehnbare flächige dielektrische Elastomerfolie (8), die mindestens eine elektrisch nichtleitfähige Elastomerfolie mit den mindestens zwei Elektroden (3) in Form elektrisch leitfähiger Elektrodenschichten auf ihren beiden Seiten aufweist und die zwischen den beiden Profilen derart angeordnet ist, dass
- im unbelasteten Zustand des Sensors mindestens ein Hohlraum (5) zwischen der dielektrischen Elastomerfolie und der ersten oder der zweiten Elastomerschicht vorliegt, wobei die dielektrische Elastomerfolie bei einer Druckbelastung des Sensors durch das Ineinandergreifen der Profile gedehnt und durch Reduktion des Volumens des mindestens einen Hohlraums (5) der Abstand zwischen den mindestens zwei Elektroden (3) verringert werden kann, derart dass sich dadurch die elektrische Kapazität messbar erhöht.

2. Sensor nach Anspruch 1, bei dem die dielektrische Elastomerfolie im selben Flächensegment einen Satz von einer vorzugsweise ungeraden Anzahl von Elektrodenschichten, welche durch elektrisch nichtleitfähige Schichten voneinander isoliert und alternierend zu insgesamt zwei Elektroden mit verschiedenen elektrischen Potentialen verbunden sind, als Mehrschichtaufbau aufweist.

3. Flächiger volumenkompressibler kapazitiver Sensor (1) zur Messung von Druck oder zur Messung oder Detektion von Deformationen, der zumindest auf einer seiner äußeren Flächenseiten flexibel und dadurch für Druck und/oder Deformationen ortsabhängig verformbar ausgebildet ist, aufweisend
- mindestens zwei Elektroden (3), zwischen denen die elektrische Kapazität gemessen werden kann,
- eine erste Elastomerschicht (2), deren eine Oberfläche ein unebenes Profil mit Erhöhungen oder Vertiefungen (4) aufweist, wobei das Profil von einer Elektrodenschicht (3) vollständig bedeckt ist oder die erste Elastomerschicht vollständig elektrisch leitfähig ausgebildet ist,
- eine zweite Elastomerschicht (2), die in Richtung senkrecht zu der ersten Elastomerschicht (2) über der ersten Elastomerschicht angeordnet ist und deren der ersten Elastomerschicht zugewandte Oberfläche ein unebenes Profil (4) aufweist, das zum Profil (4) der ersten Elastomerschicht teilweise, weitgehend oder vollständig komplementär ist, derart dass bei einer Druckbelastung des Sensors die Erhöhungen und Vertiefungen der einander gegenüber angeordneten Profile der beiden Elastomerschichten zumindest teilweise ineinandergreifen, wobei das Profil der zweiten Elastomerschicht von einer Elektrodenschicht bedeckt ist oder die zweite Elastomerschicht vollständig elektrisch leitfähig ausgebildet ist,
- eine stark dehnbare flächige Elastomerfolie (6), die zwischen den beiden Profilen (4) derart angeordnet ist, dass
- im unbelasteten Zustand des Sensors mindestens ein Hohlraum (5) zwischen der Elastomerfolie (6) und der ersten oder der zweiten Elastomerschicht (2) vorliegt, wobei die Elastomerfolie bei einer Druckbelastung des Sensors durch das Ineinandergreifen der Profile gedehnt wird oder mindestens eines der Profile verformt und durch Reduktion des Volumens des mindestens einen Hohlraums (5) der Abstand zwischen den mindestens zwei Elektroden (3) verringert werden kann, derart dass sich dadurch die elektrische Kapazität messbar erhöht.

4. Sensor nach Anspruch 3, bei dem die stark dehnbare flächige Elastomerfolie ausgewählt ist unter
- einer elektrisch nicht leitenden Elastomerfolie,
- einem Mehrschichtverbund aus elektrisch leitenden und nicht leitenden Schichten und
- einer elektrisch leitenden Elastomerfolie.

5. Sensor nach einem der Ansprüche 1 bis 4, bei dem zwischen den beiden Elastomerschichten elastisch komprimierbare Körper vorgesehen sind, die die beiden Elastomerschichten im unbelasteten Zustand des Sensors in einem definierten Abstand voneinander halten.

6. Sensor nach Anspruch 5, bei dem die elastisch komprimierbaren Körper jeweils mit einer der beiden Elastomerschichten mechanisch verbunden sind und, nur getrennt durch die Elastomerfolie, paarweise aufeinander stoßen.

7. Sensor nach Anspruch 5 oder 6, bei dem die elastisch komprimierbaren Körper zwischen den beiden Elastomerschichten und/oder die Profilerhöhungen mit der Elastomerfolie mechanisch verbunden sind.

8. Sensor nach einem der Ansprüche 1 bis 7, bei dem die Oberflächenprofile der beiden Elastomerschichten periodisch sind, wobei die Periodizität vorzugsweise eindimensional oder zweidimensional ist.

9. Sensor nach einem der vorangehenden Ansprüche, der mindestens zwei in verschiedenen Flächensegmenten angeordnete Elektrodenpaare aufweist.

10. Sensor nach Anspruch 9, der eine ein- oder zweidimensionale periodische Array-Anordnung von Elektrodenpaaren aufweist.

11. Aufnahmebehälter für fluide Medien wie Flüssigkeiten, Gase, Pulver, rieselfähige Materialien oder disperse Stoffe oder für nachgiebige Medien wie Gele oder biologische Materialien, der in einer seiner Boden-, Decken- oder Seitenwände einen flächigen volumenkompressiblen kapazitiven Sensor nach einem der voranstehenden Ansprüche aufweist, dergestalt dass bei der Aufnahme eines fluiden oder nachgiebigen Mediums im Aufnahmebehälter der Sensor den vom fluiden oder nachgiebigen Medium ausgeübten Druck messen kann.

12. Aufnahmebehälter nach Anspruch 11, bei dem die flexible oder starre Oberfläche des Sensors mit dem Aufnahmebehälter mechanisch untrennbar oder aber abnehmbar ausgebildet ist.

13. Verwendung des Sensors nach einem der Ansprüche 1 bis 10 als flexibler Drucksensor oder als Sensorarray zur Messung von flächigen Druckverteilungen oder als Deformations- und Verformungssensor auf oder in Sitzen, Betten, Matratzen, Schuhen, Teppichen, Regalen, Vitrinen, Fußböden oder anderen Unterlagen oder als Füllstandssensor, Gasdruck- oder Gasdruckdifferenzsensor oder Auflagedrucksensor für fluide Medien oder für nachgiebige Medien.

## Claims

1. A flat volumetric compressible capacitive sensor (1) for measuring pressure or for measuring or detecting deformations, which is flexible on at least one of its outer surface sides and thus deformable in a location-dependent manner for pressure and/or deformations, having
- at least two electrodes (3) between which the electrical capacitance can be measured,
- a first elastomer layer (2), one surface of which has an uneven profile with elevations or depressions (4),
- a second elastomer layer (2) which is arranged above the first elastomer layer in the direction perpendicular to the first elastomer layer (2) and whose surface facing the first elastomer layer has an uneven profile (4) which is partially, substantially or completely complementary to the profile (4) of the first elastomer layer in such a way that, when the sensor is subjected to a pressure load, the elevations and depressions of the profiles of the two elastomer layers arranged opposite one another engage at least partially in one another,
- a highly stretchable flat dielectric elastomer film (8), which has at least one electrically non-conductive elastomer film with the at least two electrodes (3) in the form of electrically conductive electrode layers on its two sides and which is arranged between the two profiles in such a way that
- at least one cavity (5) is present between the dielectric elastomer film and the first or the second elastomer layer in the unloaded state of the sensor, wherein the dielectric elastomer film can be stretched by the engagement of the profiles in one another when the sensor is subjected to a pressure load and the distance between the at least two electrodes (3) can be reduced by reducing the volume of the at least one cavity (5) in such a way that the electrical capacitance is measurably increased as a result.

2. The sensor according to claim 1, in which the dielectric elastomer film has, as a multilayer structure, in the same surface segment a set of a preferably odd number of electrode layers which are insulated from one another by electrically non-conductive layers and alternately connected to a total of two electrodes with different electrical potentials.

3. A flat volumetric compressible capacitive sensor (1) for measuring pressure or for measuring or detecting deformations, which is flexible on at least one of its outer surface sides and thus deformable in a location-dependent manner for pressure and/or deformations, having
- at least two electrodes (3) between which the electrical capacitance can be measured,
- a first elastomeric layer (2), one surface of which has an uneven profile with elevations or depressions (4), the profile being formed by an electrode layer (3) is completely covered or the first elastomer layer is completely electrically conductive,
- a second elastomer layer (2) which is arranged above the first elastomer layer in the direction perpendicular to the first elastomer layer (2) and whose surface facing the first elastomer layer has an uneven profile (4) which is partially, substantially or completely complementary to the profile (4) of the first elastomer layer, such that, when the sensor is subjected to a pressure load, the elevations and depressions of the profiles of the two elastomer layers arranged opposite one another engage at least partially in one another, the profile of the second elastomer layer being covered by an electrode layer or the second elastomer layer being completely electrically conductive,
- a highly stretchable flat elastomeric film (6) which is arranged between the two profiles (4) in such a way that
- at least one cavity (5) is present between the elastomer film (6) and the first or the second elastomer layer (2) in the unloaded state of the sensor, wherein the elastomer film is stretched or at least one of the profiles is deformed when the sensor is subjected to a pressure load due to the engagement of the profiles in one another, and the distance between the at least two electrodes (3) can be reduced by reducing the volume of the at least one cavity (5), in such a way that the electrical capacitance is measurably increased as a result.

4. The sensor according to claim 3, wherein the highly stretchable elastomeric sheet is selected from
- an electrically non-conductive elastomer film,
- a multilayer composite of electrically conductive and non-conductive layers and
- an electrically conductive elastomer film.

5. The sensor according to one of claims 1 to 4, in which between the two elastomer layers elastically compressible bodies are provided which keep the two elastomer layers at a defined distance from each other in the unloaded state of the sensor.

6. The sensor according to Claim 5, in which the elastically compressible bodies are each mechanically connected to one of the two elastomer layers and collide in pairs, separated only by the elastomer film.

7. The sensor according to claim 5 or 6, in which the elastically compressible bodies between the two elastomer layers and/or the profile elevations are mechanically connected to the elastomer film.

8. The sensor according to any of claims 1 to 7, wherein the surface profiles of the two elastomer layers are periodic, the periodicity preferably being one-dimensional or two-dimensional.

9. The sensor according to one of the preceding claims, comprising at least two pairs of electrodes arranged in different surface segments.

10. The sensor according to claim 9 having a one- or two-dimensional periodic array arrangement of pairs of electrodes.

11. A receiving container for fluid media such as liquids, gases, powders, free-flowing materials or disperse substances or for compliant media such as gels or biological materials, which has in one of its base walls, top walls or side walls a two-dimensional volume-compressible capacitive sensor in accordance with one of the preceding claims, in such a way that, when a fluid or compliant medium is received in the receiving container, the sensor can measure the pressure exerted by the fluid or compliant medium.

12. The receiving container as claimed in claim 11, in which the flexible or rigid surface of the sensor with the receptacle is mechanically inseparable or removable.

13. The use of the sensor according to any of claims 1 to 10 as a flexible pressure sensor or as a sensor array for measuring surface pressure distributions or as a deformation sensor on or in seats, beds, mattresses, shoes, carpets, shelves, display cases, floors or other surfaces or as a level sensor, gas pressure or gas pressure difference sensor or support pressure sensor for fluid media or for compliant media.

## Revendications

1. Capteur capacitif plat à compression de volume (1) pour la mesure de la pression ou la mesure ou la détection de déformations, qui est réalisé sous forme flexible au moins sur un de ses côtés plats extérieurs et de ce fait déformable selon l'endroit pour la pression et/ou les déformations, présentant
- au moins deux électrodes (3), entre lesquelles la capacité électrique peut être mesurée,
- une première couche élastomère (2), dont une surface présente un profil inégal avec des protubérances ou des creux (4),
- une seconde couche élastomère (2), qui est disposée en direction perpendiculaire à la première couche élastomère (2) au-dessus de la première couche élastomère et dont la surface tournée vers la première couche élastomère présente un profil inégal (4), qui est partiellement, largement ou entièrement complémentaire au profil (4) de la première couche élastomère, de telle manière que lors d'une charge de pression sur le capteur, les protubérances et les creux des profils disposés l'un en face de l'autre des deux couches élastomères s'interpénètrent au moins en partie,
- une feuille élastomère diélectrique plate fortement extensible (8), qui présente au moins une feuille élastomère électriquement non conductrice avec lesdites au moins deux électrodes (3) sous la forme de couches d'électrode électriquement conductrices sur ses deux côtés et qui est disposée entre les deux profils, de telle manière que
- dans l'état non chargé du capteur il existe au moins un espace creux (5) entre la feuille élastomère diélectrique et la première ou la seconde couche élastomère, dans lequel la feuille élastomère diélectrique est allongée par l'interférence des profils lors d'une charge de pression sur le capteur et la distance entre lesdites au moins deux électrodes (3) peut être réduite par la réduction du volume dudit au moins un espace creux (5), de telle manière que la capacité électrique augmente ainsi de façon mesurable.

2. Capteur selon la revendication 1, dans lequel la feuille élastomère diélectrique présente dans le même segment de surface, comme structure multicouche, un ensemble d'un nombre de préférence impair de couches d'électrode, qui sont isolées l'une de l'autre par des couches électriquement non conductrices et qui sont reliées en alternance en formant au total deux électrodes avec des potentiels électriques différents.

3. Capteur capacitif plat à compression de volume (1) pour la mesure de la pression ou pour la mesure ou la détection de déformations, qui est réalisé sous forme flexible au moins sur un de ses côtés plats extérieurs et de ce fait déformable selon l'endroit pour la pression et/ou les déformations, présentant
- au moins deux électrodes (3), entre lesquelles la capacité électrique peut être mesurée,
- une première couche élastomère (2), dont une surface présente un profil inégal avec des protubérances ou des creux (4), dans lequel le profil est entièrement recouvert d'une couche d'électrode (3) ou la première couche élastomère est entièrement réalisée sous forme électriquement conductrice,
- une seconde couche élastomère (2), qui est disposée en direction perpendiculaire à la première couche élastomère (2) au-dessus de la première couche élastomère et dont la surface tournée vers la première couche élastomère présente un profil inégal (4), qui est partiellement, largement ou entièrement complémentaire au profil (4) de la première couche élastomère, de telle manière que lors d'une charge de pression sur le capteur, les protubérances et les creux des profils disposés l'un en face de l'autre des deux couches élastomères s'interpénètrent au moins en partie, dans lequel le profil de la seconde couche élastomère est recouvert d'une couche d'électrode ou la seconde couche élastomère est entièrement réalisée sous forme électriquement conductrice,
- une feuille élastomère plate fortement extensible (6), qui est disposée entre les deux profils (4), de telle manière que
- dans l'état non chargé du capteur il existe au moins un espace creux (5) entre la feuille élastomère (6) et la première ou la seconde couche élastomère (2), dans lequel la feuille élastomère est allongée par l'interférence des profils lors d'une charge de pression sur le capteur ou au moins un des profils se déforme et la distance entre lesdites au moins deux électrodes (3) peut être réduite par la réduction du volume dudit au moins un espace creux (5), de telle manière que la capacité électrique augmente ainsi de façon mesurable.

4. Capteur selon la revendication 3, dans lequel la feuille élastomère plate fortement extensible est choisie parmi
- une feuille élastomère électriquement non conductrice,
- un composite stratifié de couches électriquement conductrices et non conductrices, et
- une feuille élastomère électriquement conductrice.

5. Capteur selon l'une quelconque des revendications 1 à 4, dans lequel il est prévu entre les deux couches élastomères des corps élastiquement compressibles, qui dans l'état non chargé du capteur maintiennent les deux couches élastomères à une distance définie l'une de l'autre.

6. Capteur selon la revendication 5, dans lequel les corps élastiquement compressibles sont mécaniquement reliés respectivement à une des deux couches élastomères et, séparés seulement par la feuille élastomère, s'appuient par paires les uns sur les autres.

7. Capteur selon une revendication 5 ou 6, dans lequel les corps élastiquement compressibles sont mécaniquement reliés à la feuille élastomère entre les deux couches élastomères et/ou les protubérances des profils.

8. Capteur selon l'une quelconque des revendications 1 à 7, dans lequel les profils des surfaces des deux couches élastomères sont périodiques, dans lequel la périodicité est de préférence unidimensionnelle ou bidimensionnelle.

9. Capteur selon l'une quelconque des revendications précédentes, qui présente au moins deux paires d'électrodes disposées dans différents segments de la surface.

10. Capteur selon la revendication 9, qui présente un arrangement en réseau périodique à une ou deux dimension(s) de paires d'électrodes.

11. Récipient de réception pour des milieux fluides, tels que des liquides, des gaz, des poudres, des matériaux coulants ou des substances dispersées ou pour des milieux souples tels que des gels ou des matières biologiques, qui présente dans des parois de fond, de plafond ou de flanc un capteur capacitif plat à compression de volume selon l'une quelconque des revendications précédentes, de telle manière que lors de la réception d'un milieu fluide ou souple dans le récipient de réception le capteur puisse mesurer la pression exercée par le milieu fluide ou souple.

12. Capteur selon l'une quelconque des revendications précédentes, dans lequel la surface flexible ou rigide du capteur est réalisée de façon mécaniquement inséparable du récipient de réception ou cependant amovible.

13. Utilisation du capteur selon l'une quelconque des revendications 1 à 10 comme capteur de pression flexible ou comme réseau de capteurs pour la mesure de distributions plates de pression ou comme capteur de déformations et de formes sur ou dans des sièges, des lits, des matelas, des chaussures, des tapis, des rayonnages, des vitrines, des planchers ou d'autres supports ou comme capteur de niveau de remplissage, comme capteur de pression de gaz ou de différence de pression de gaz ou comme capteur de pression d'appui pour des milieux fluides ou des milieux souples.
